# EUROPEAN PATENT APPLICATION

(11) **EP 2 463 994 A1**
(43) Date of publication of application: **13.06.2012**
(21) Application number: 10806328.0
(22) Date of filing: 16.07.2010
(51) Int. Cl.: H02M 3/155

(54) **DC-DC CONVERTER CIRCUIT**

(30) Priority: 06.08.2009 JP 2009183458; 06.08.2009 JP 2009183459
(71) Applicant: Yanmar Co., Ltd., Osaka-shi, Osaka 530-0013 (JP)
(72) Inventor: MOTEGI, Shinichi, Osaka-shi Osaka 530-0013 (JP)
(74) Representative: Harland, Linda Jane
(86) International application number: PCT/JP2010/062091
(87) International publication number: WO 2011/016328

(57) **Abstract**

There is provided a DC-DC converter circuit with which a rapid mode switching process can be achieved, conduction loss between switching elements is lower than in the conventional art, which affords an increase in power conversion efficiency.

A DC-DC converter circuit 10A includes first to sixth semiconductor switches S1 to S6 and an inductor L. The first to third semiconductor switches S1 to S3 are connected to one end of the inductor L. The fourth to sixth semiconductor switches S4 to S6 are connected to the other end of the inductor L. A first voltage supply E1 is connected to opposite ends of the first and fourth semiconductor switches S1 and S4 from the ends of the first and fourth semiconductor switches S1 and S4 connected to the inductor. A second voltage supply E2 is connected to opposite ends of the second and fifth semiconductor switches S2 and S5 from the ends of the second and fifth semiconductor switches S2 and S5 connected to the inductor. The first voltage supply E1 and the second voltage supply E2 are both connected to opposite ends of the third and sixth semiconductor switches S3 and S6 from the ends of the third and sixth semiconductor switches S3 and S6 connected to the inductor.

## Description

### Technical Field

The present invention relates to a DC-DC converter circuit, and more particularly relates to the reduction of conduction loss in a bidirectional buck-boost DC-DC converter circuit.

### Background Art

A DC-DC converter circuit is connected, for example, between first and second DC voltage supplies (hereinafter referred to simply as first and second voltage supplies), and is used as a bidirectional switching circuit that can supply power from a first voltage supply to a second voltage supply, or supply power from a second voltage supply to a first voltage supply, on the basis of the output voltage of the first and second voltage supplies.

For instance, a DC-DC converter circuit is sometimes used in electric vehicles such as work vehicles. An electric vehicle generally has a motor or other such vehicle electric drive unit that is actuated by AC power obtained by converting DC power from a an electric accumulation device such as a battery or a capacitor into AC power with an inverter circuit or other such power conversion circuit. The DC-DC converter circuit is provided between the electric accumulation device serving as a first voltage supply and a second voltage supply to which the inverter circuit or other such power conversion circuit is connected, and is designed so that power is supplied from the electric accumulation device to the power conversion circuit in powering mode, whereas power is supplied from the power conversion circuit to the electric accumulation device in regeneration mode.

An example of a conventional DC-DC converter circuit is the chopper circuit discussed in Patent Document 1 (see FIG. 1 in Patent Document 1).

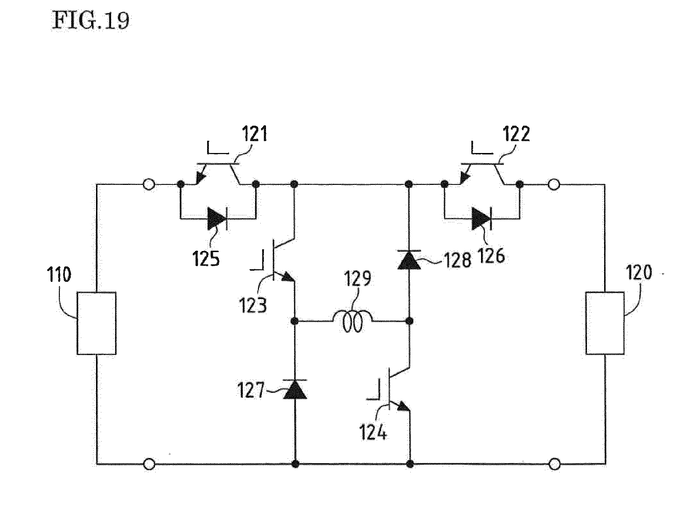

FIG. 19 is a circuit diagram of an example of a conventional DC-DC converter circuit. The DC-DC converter circuit shown in FIG. 19 includes first to fourth semiconductor switch 121 to 124 , first to fourth diodes 125 to 128 and an inductor 129.

The first to fourth semiconductor switches 121 to 124 are semiconductor devices that allows current to flow in only one direction. The first and second diodes 125 and 126 are respectively connected in parallel to the first and second semiconductor switches 121 and 122 so that the first to fourth diodes 121 b to 124b allow current to flow in a reverse direction, and the cathode side of the first diode 125 connected in parallel to the first semiconductor switch 121 is connected to the anode side of the second diode 126 connected in parallel to the second semiconductor switch 122.

The current flow-in side of the third semiconductor switch 123 is connected to the cathode side of the first diode 125 connected in parallel to the first semiconductor switch 121, and the cathode side of the fourth diode 128 is connected to the anode side of the second diode 126 connected in parallel to the second semiconductor switch 122.

The inductor 129 is connected at one end to both the current flow-out side of the third semiconductor switch 123 and the cathode side of the third diode 127, and at the other end to both the anode side of the fourth diode 128 and the current flow-in side of the fourth semiconductor switch 124.

With the DC-DC converter circuit shown in FIG. 19, a first voltage supply 110 is connected between the anode side of the first diode 125 connected in parallel to the first semiconductor switch 121 and the anode side of the third diode 127, and a second voltage supply 120 is connected between the cathode side of the second diode 126 connected in parallel to the second semiconductor switch 122 and the current flow-out side of the fourth semiconductor switch 124.

With this conventional DC-DC converter circuit, examples of operating modes indicating the ON and OFF states of the semiconductor switch 121 to 124 include the following powering mode and regeneration mode.

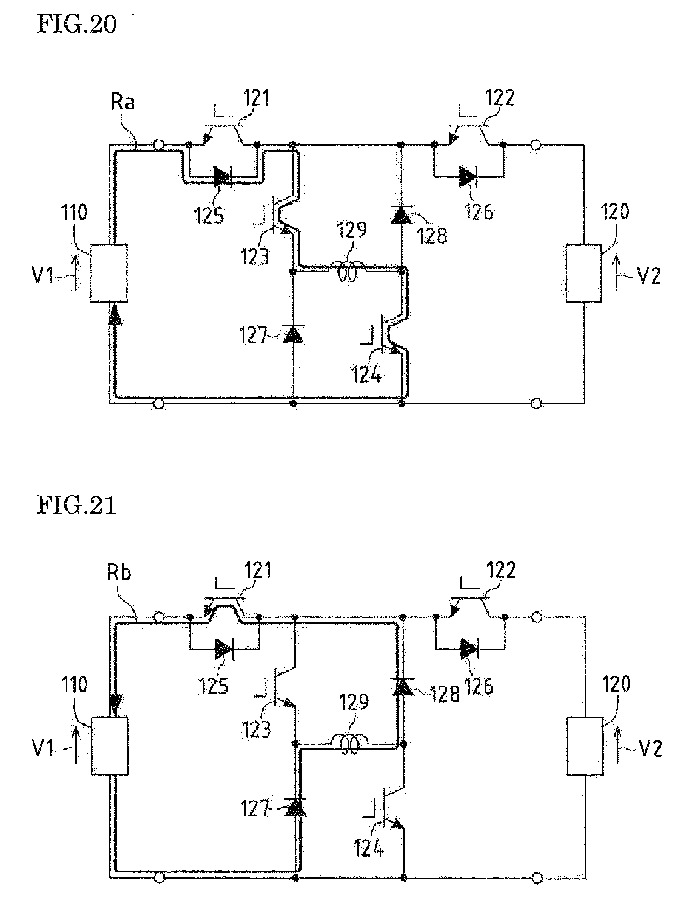

FIG. 20 is a diagram showing the state when the DC-DC converter circuit shown in FIG. 19 is operating in powering mode.

For example, as shown in FIG. 20, the powering mode is a mode that forms a current path Ra that goes from the first voltage supply 110, through the first diode 125, the third semiconductor switch 123, the inductor 129, and the fourth semiconductor switch 124, and back to the first voltage supply 110.

FIG. 21 consists of diagrams of the state when the DC-DC converter circuit shown in FIG. 19 is operating in regeneration mode.

For example, as shown in FIG. 21, the regeneration mode is one that forms a current path Rb that goes from the first voltage supply 110, through the third diode 127, the inductor 129, the fourth diode 128, and the first semiconductor switch 121, and back to the first voltage supply 110.

In such a conventional DC-DC converter circuit, in the current path Ra in powering mode and the current path Rb in regeneration mode, current flows through the inductor 129 in a prescribed direction, so that it is not necessary to reverse current flowing through the inductor 129 when switching mode between powering mode and regeneration mode by switching operation between the ON state and the OFF state of the semiconductor switches 121 to 124. Accordingly, time required for mode switching can be reduced and a rapid mode switching process can be achieved. However, in the case where the output voltage V1 of the first voltage supply 110 is larger than the output voltage V2 of the second voltage supply 120, the first and second diodes 125 and 126 are both in their ON states and the output voltage V1 and the output voltage V2 become equal. Therefore, the output voltage V2 of the second voltage supply 120 cannot be smaller than the output voltage V1 of the first voltage supply 110.

### Prior Art Document

### Patent Document

[Patent Document 1] JP2007-151311A

### Summary of Invention

### Problems to be Solved by the Invention

With a DC-DC converter circuit, however, as the number of semiconductor elements through which current passes increases, there is a corresponding rise in conduction loss, and this is accompanied by a drop in power conversion efficiency.

With the conventional DC-DC converter circuit shown in FIG. 19, for example, in the powering mode (see FIG. 20), current passes through the first diode 125, the third semiconductor switch 123 and the fourth semiconductor switch 124. In the regeneration mode (see FIG. 21), current passes through the third diode 127, the fourth diode 128 and the first semiconductor switch 121. That is, current passes through at least three semiconductor elements whether in powering mode or regeneration mode, so there is a corresponding rise in conduction loss, and this is accompanied by a drop in power conversion efficiency.

In view of this, it is an object of the present invention to provide a DC-DC converter circuit with which a rapid mode switching process between powering mode and regeneration mode can be achieved, and conduction loss in semiconductor elements can be lower than in the conventional art, which affords an increase in power conversion efficiency.

### Means for Solving the Problems

In order to solve the above problems, the present invention provides a DC-DC converter circuit comprising first to sixth semiconductor switches that allow current to flow in one direction, and an inductor, wherein the first to third semiconductor switches are connected to one end of the inductor in a direction such that current flows from the first to third semiconductor switches into the one end of the inductor, the fourth to sixth semiconductor switches are connected to the other end of the inductor in a direction such that current flows out from another end of the inductor into the fourth to sixth semiconductor switches, a positive pole side of a first voltage supply is connected to opposite ends of the first and fourth semiconductor switches from the ends of the first and fourth semiconductor switches connected to the inductor, a positive pole side of a second voltage supply is connected to opposite ends of the second and fifth semiconductor switches from the ends of the second and fifth semiconductor switches connected to the inductor, a negative pole side of the first voltage supply and a negative pole side of the second voltage supply are both connected to opposite ends of the third and sixth semiconductor switches from the ends of the third and sixth semiconductor switches connected to the inductor.

With the DC-DC converter circuit according to the present invention, the output voltage can be stepped up and down in both directions between the first voltage supply and the second voltage supply. Also, power can be supplied in both directions between the first voltage supply and the second voltage supply. Furthermore, current can be passed through the inductor only in one direction. Thus, when switching mode between powering mode and regeneration mode, current flowing through the inductor is not reversed, so that time required for mode switching can be correspondingly reduced, which make a rapid mode switching process possible. Furthermore, current can be passed through at least two semiconductor switches (two third of the switching elements compared to the conventional art), conduction loss can be correspondingly reduced, and this affords an increase in power conversion efficiency. This effect will be described in detail in the first embodiment below.

As to the module used for the inverter circuit or other such power conversion circuit, there is a commercially available module in which two reverse conducting semiconductor elements are connected in series and integrated (called a 2-in-1 module). With the DC-DC converter circuit according to the present invention, it is sometimes preferable to use this 2-in-1 module, depending on the power capacity and other such design specifications.

From this standpoint, an embodiment in which it is possible to configure a circuit to which a 2-in-1 module can be applied in the DC-DC converter circuit according to the present invention includes a DC-DC converter circuit further comprising first to sixth diodes connected in parallel to the first to sixth semiconductor switches so that the first to sixth diodes allow current to flow in the opposite direction from the direction of on and off control of current by the first to sixth semiconductor switches, and seventh to twelfth diodes connected between the first to sixth semiconductor switches and the inductor so that the seventh to twelfth diodes allow current to flow in the opposite direction from that of the first to sixth diodes.

Examples of the above-mentioned semiconductor switches include an IGBT (insulated gate bipolar transistor), MOSFET (metal-oxide-semiconductor field-effect transistor), GTO (gate turn-off thyristor), and other such semiconductor switches. Examples of the above-mentioned reverse conducting semiconductor elements include a MOSFET or other such semiconductor element having a structurally parasitic diode (or body diode), and an IGBT, GTO, or other such semiconductor element in which diodes are connected in parallel to the semiconductor switch so that the diodes allow current to flow in a reverse direction. Examples include a reverse conducting IGBT element, a reverse conducting MOSFET element, and a reverse conducting GTO element.

A gate drive power supply may be used for each of the various semiconductor switches, but depending on the power capacity and other design specifications, it may be preferable to use a gate drive power supply that is shared with the semiconductor switches to reduce the number of gate drive power supplies.

From this standpoint, embodiments in which it is possible to configure a circuit that reduces the number of gate drive power supplies in the DC-DC converter circuit according to the present invention include a DC-DC converter circuit further comprising first to third diodes connected in parallel to the first to third semiconductor switches so that the first to third diodes allow current to flow in the opposite direction from the direction of on and off control of current by the first to third semiconductor switches, a fourth diode connected between the first semiconductor switch and the positive pole of the first voltage supply so that the fourth diode allows current to flow in the opposite direction from that of the first diode, a fifth diode connected between the second semiconductor switch and the positive pole side of the second voltage supply so that the fifth diode allows current to flow in the opposite direction from that of the second diode, and a sixth diode connected between the third semiconductor switch and the negative pole sides of both the first and second voltage supplies so that the sixth diode allows current to flow in the opposite direction from that of the third diode.

Also, from the standpoint of preventing damage to the first to sixth semiconductor switches due to high voltage, the following embodiments (a) to (c) are preferable in the DC-DC converter circuit according to the present invention. Specifically,
(a) In this embodiment, the DC-DC converter circuit includes means for constantly keeping in an ON state at least one of the first to third semiconductor switches and at least one of the fourth to sixth semiconductor switches when current is flowing through the inductor.

(b) In this embodiment, the DC-DC converter circuit includes means for, when current is flowing through the inductor, turning on in advance, before turning off one or two of the first to third semiconductor switches, at least one of the first to third semiconductor switches other than the semiconductor switch to be turned off, and turning on in advance, before turning off one or two of the fourth to sixth semiconductor switches, at least one of the fourth to sixth semiconductor switches other than the semiconductor switch to be turned off.

(c) In this embodiment, the DC-DC converter circuit includes means for, in a state where current is flowing through the inductor, when changing an operation mode indicating an ON state and an OFF state of the first to sixth semiconductor switches, keeping in their ON states all of the semiconductor switches that are in their ON states in a pre-change operation mode, for a prescribed period of time after a change of the operation mode, or turning on all of the semiconductor switches that should be in their ON states in a post-change operation mode a prescribed period of time before a change of the operation mode

The following embodiment (d) is yet another embodiment in the DC-DC converter circuit according to the present invention. Specifically:
(d) In this embodiment, the third semiconductor switch is replaced by the third diode.

With the above embodiment (d), the output voltage can be stepped up and down in both directions between the first voltage supply and the second voltage supply. Also, power can be supplied in both directions between the first voltage supply and the second voltage supply. Furthermore, current can be passed through the inductor only in one direction. Thus, when switching mode between powering mode and regeneration mode, current flowing through the inductor is not reversed, so that time required for mode switching can be correspondingly reduced, which make a rapid mode switching process possible. Furthermore, current can be passed through at least two semiconductor switches (two third of the switching elements compared to the conventional art), conduction loss can be correspondingly reduced, and this affords an increase in power conversion efficiency. This effect will be described in detail in the second embodiment below.

As discussed above, a commercially available module in which two reverse conducting semiconductor elements are connected in series and integrated (called a 2-in-1 module) can be used as the module used for the inverter circuit or other such power conversion circuit, and depending on the power capacity and other such design specifications, it may be preferable to use this 2-in-1 module in the DC-DC converter circuit in embodiment (d) above.

From the above standpoint, an embodiment in which it is possible to configure a circuit to which a 2-in-1 module can be applied in the DC-DC converter circuit in embodiment (d) above includes a DC-DC converter circuit further comprising first, second, fourth, fifth and sixth diodes connected in parallel to the first, second, fourth, fifth and sixth semiconductor switches so that the first, second, fourth, fifth and sixth diodes allow current to flow in the opposite direction from the direction of on and off control of current by the first, second, fourth, fifth and sixth semiconductor switches, and seventh, eighth, tenth, eleventh and twelfth diodes connected between the first, second, fourth, fifth and sixth semiconductor switches and the inductor so that seventh, eighth, tenth, eleventh and twelfth diodes allow current to flow in the opposite direction from that of the first, second, fourth, fifth and sixth diodes.

With respect to each semiconductor switch, one gate drive power supply may be used, but there are cases in which it is preferable to use a gate drive power supply that is shared with the semiconductor switches so that the number of gate drive sources is reduced, depending on the power capacity and other such design specifications.

From the above standpoint, an embodiment in which it is possible to configure a circuit which can reduce the number of gate drive power supplies in the DC-DC converter circuit in embodiment (d) above includes a circuit in the DC-DC converter circuit further comprising first and second diodes connected in parallel to the first and second semiconductor switches so that the first and second diodes allow current to flow in the opposite direction from the direction of on and off control of current by the first and second semiconductor switches, a fourth diode connected between the first semiconductor switch and the positive pole of the first voltage supply so that the fourth diode allows current to flow in the opposite direction from that of the first diode, and a fifth diode connected between the second semiconductor switch and the positive pole side of the second voltage supply so that the fifth diode allows current to flow in the opposite direction from that of the second diode.

With the DC-DC converter circuit in embodiment (d) above, the following embodiments (e) to (g) are preferable from the standpoint of preventing damage to the first to sixth semiconductor switches due to high voltage. Specifically:
(e) This embodiment includes means for constantly keeping in an ON state at least one of the fourth to sixth semiconductor switches when current is flowing through the inductor.

(f) This embodiment includes means for, when current is flowing through the inductor, turning on in advance, before turning off one or two of the fourth to sixth semiconductor switches, at least one of the fourth to sixth semiconductor switches other than the semiconductor switch to be turned off.

(g) This embodiment includes means for, in a state where current is flowing through the inductor, when changing an operation mode indicating an ON state and an OFF state of the first, second, fourth, fifth and sixth semiconductor switches, keeping in their ON states all of the semiconductor switches that are in their ON states in a pre-change operation mode, for a prescribed period of time after a change of the operation mode, or turning on all of the semiconductor switches that should be in their ON states in a post-change operation mode a prescribed period of time before a change of the operation mode

### Effects of the Invention

As described above, the present invention provides a DC-DC converter circuit with which a rapid mode switching process between powering mode and regeneration mode can be achieved, and conduction loss in semiconductor elements can be lower than in the conventional art, which affords an increase in power conversion efficiency.

### Brief Description of Drawings

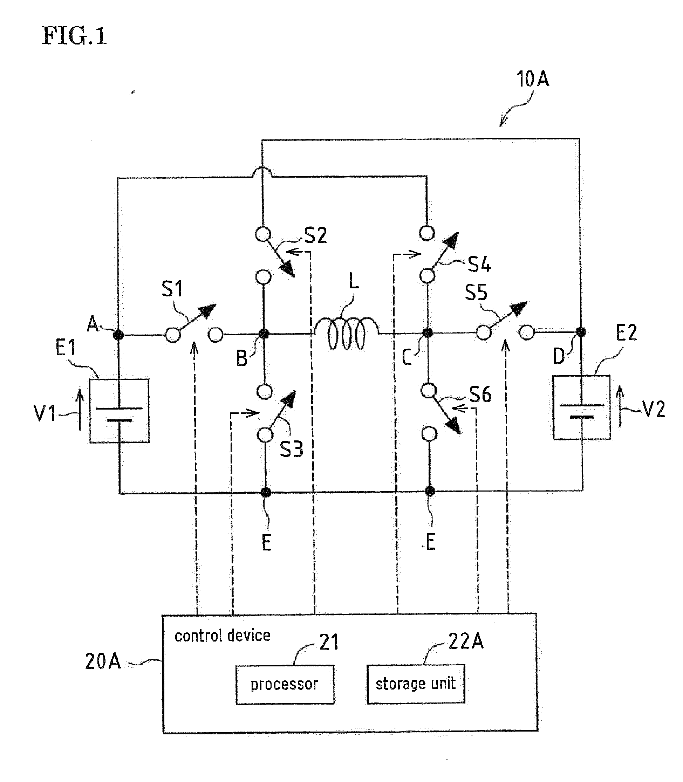

[FIG. 1] FIG. 1 is a circuit diagram showing a DC-DC converter circuit according to a first embodiment of the present invention;

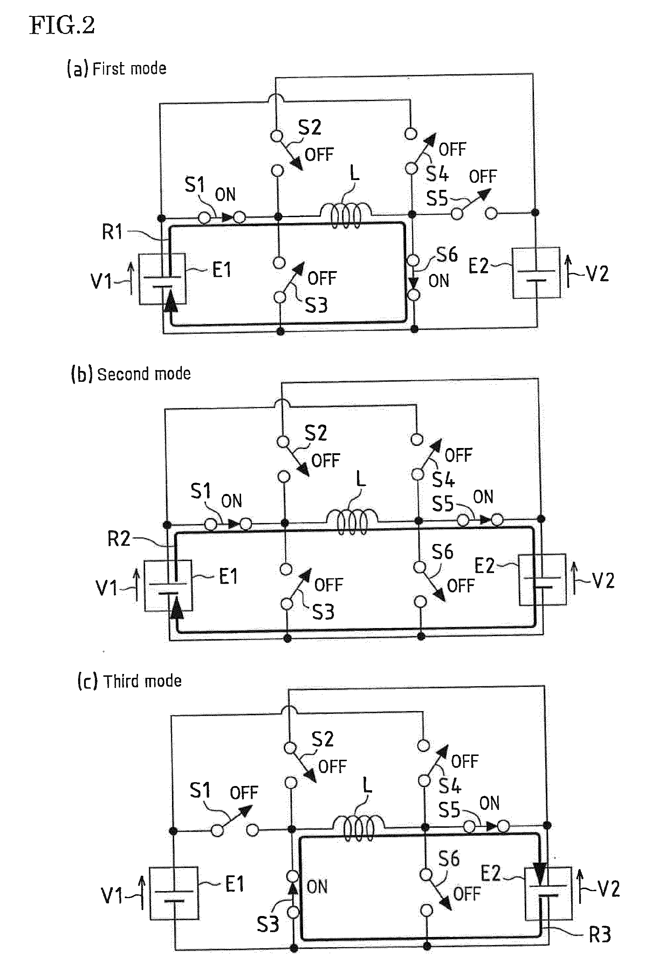

[FIG. 2] FIG. 2 consists of diagrams showing a state in which the DC-DC converter circuit shown in FIG. 1 is operating in powering mode, with part (a) of FIG. 2 showing the first mode, part (b) of FIG. 2 showing the second mode, and part (c) of FIG. 2 showing the third mode;

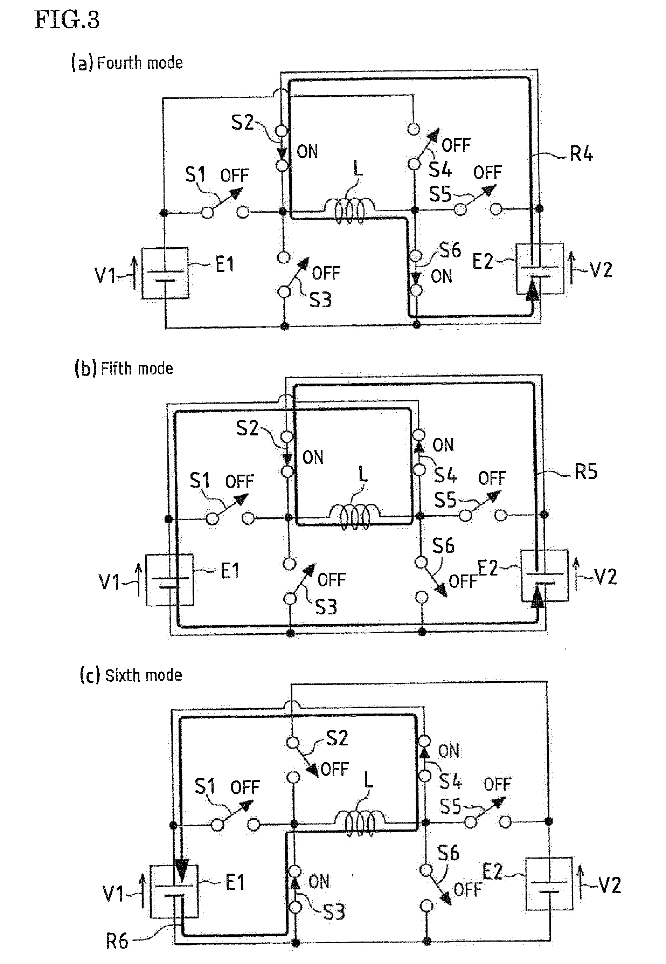

[FIG. 3] FIG. 3 consists of diagrams showing a state in which the DC-DC converter circuit shown in FIG. 1 is operating in regeneration mode, with part (a) of FIG. 3 showing the fourth mode, part (b) of FIG. 3 showing the fifth mode, and part (c) of FIG. 3 showing the sixth mode;

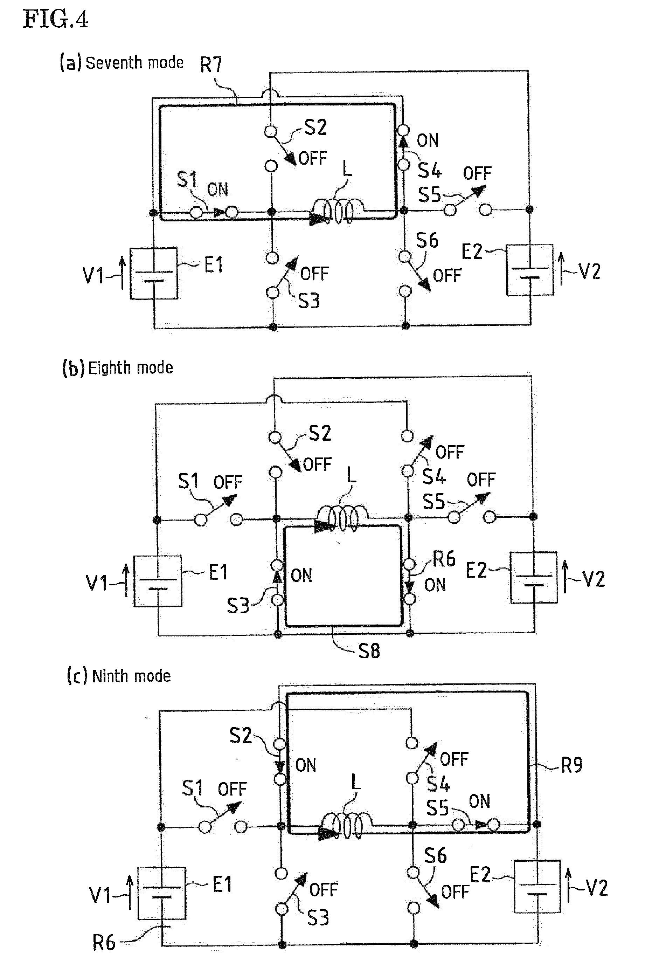

[FIG. 4] FIG. 4 consists of diagrams showing a state in which the DC-DC converter circuit shown in FIG. 1 is operating in freewheeling mode, with part (a) of FIG. 4 showing the seventh mode, part (b) of FIG. 4 showing the eighth mode, and part (c) of FIG. 4 showing the ninth mode;

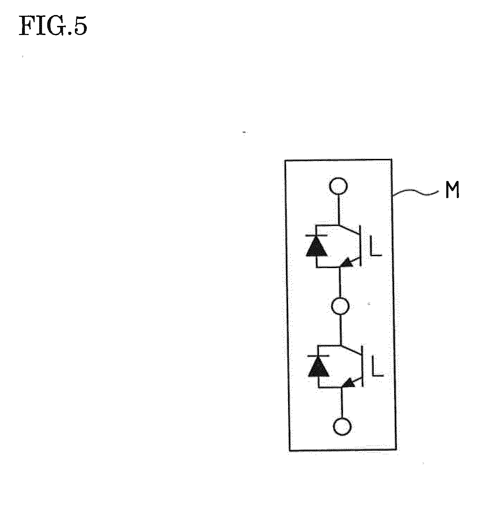

[FIG. 5] FIG. 5 is a diagram of an example of a 2-in-1 module that can be used for the first to sixth semiconductor switch in the DC-DC converter circuit shown in FIG. 1;

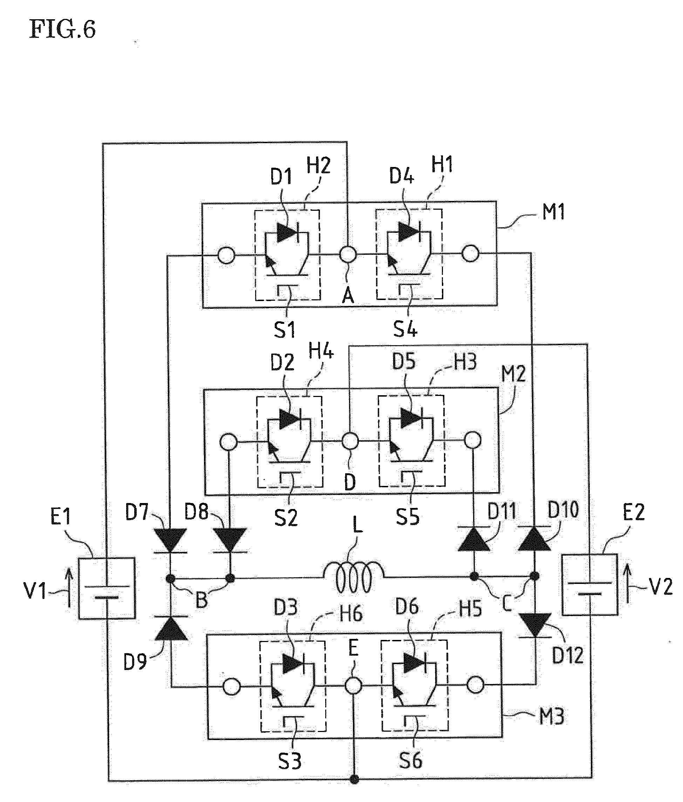

[FIG. 6] FIG. 6 is a circuit diagram of a first example that can constitute a circuit to which a 2-in-1 module can be applied in the DC-DC converter circuit shown in FIG. 1;

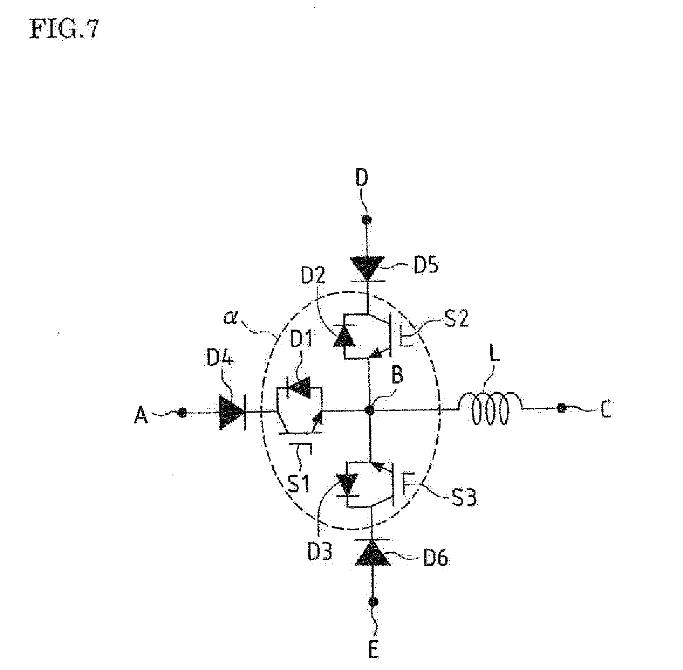

[FIG. 7] FIG. 7 is a circuit diagram of a second example that can constitute a circuit which can reduce the number of gate drive power supplies in the DC-DC converter circuit shown in FIG. 1;

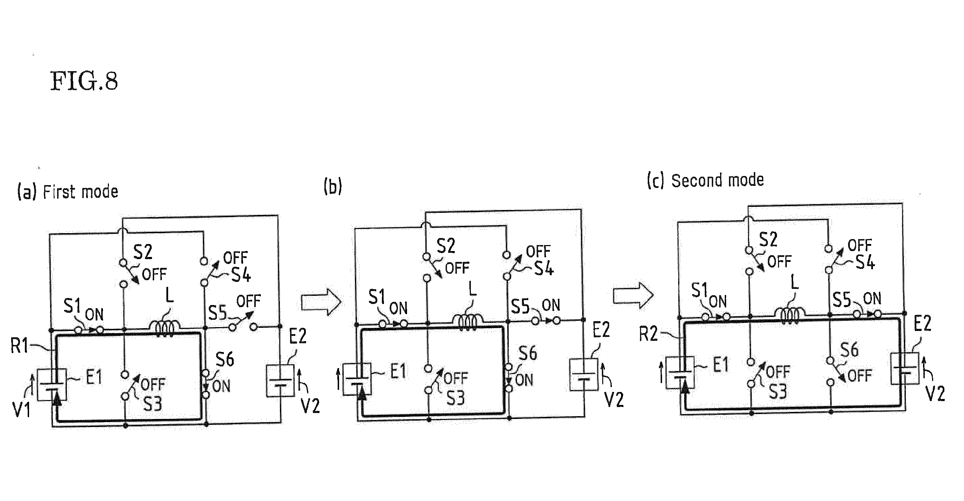

[FIG. 8] FIG. 8 is a state transition diagram showing a case when changing an operation mode from one mode of the first to ninth modes to another mode in a third control example of the DC-DC converter circuit shown in FIG. 1, with part (a) of FIG. 8 showing a state in the first mode, part (b) of FIG. 8 showing a commutation state from the first mode to the second mode, which is a case where there is one possible current path in a commutation state, and part (c) of FIG. 8 showing a state in the second mode;

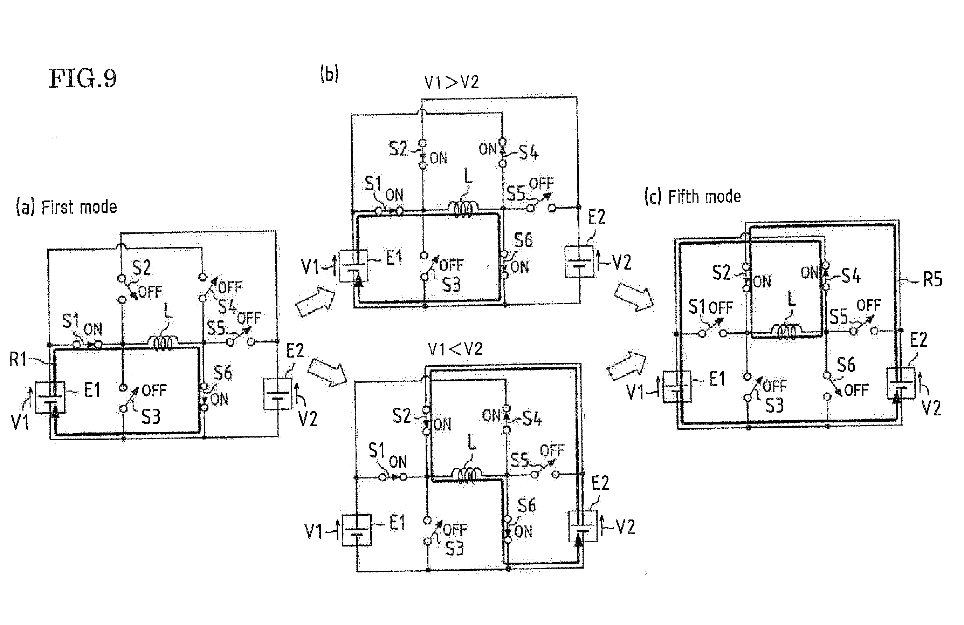

[FIG. 9] FIG. 9 is a state transition diagram showing a case when changing an operation mode from one mode of the first to ninth modes to another mode in the third control example of the DC-DC converter circuit shown in FIG. 1, with part (a) of FIG. 9 showing a state in the first mode, part (b) of FIG. 9 showing a commutation state from the first mode to the fifth mode, which is a case where there are two possible current paths in a commutation state and the current path alters depending on the magnitude relation between the output voltage of the first voltage supply and the output voltage of the second voltage supply, and part (c) of FIG. 9 showing a state in the fifth mode;

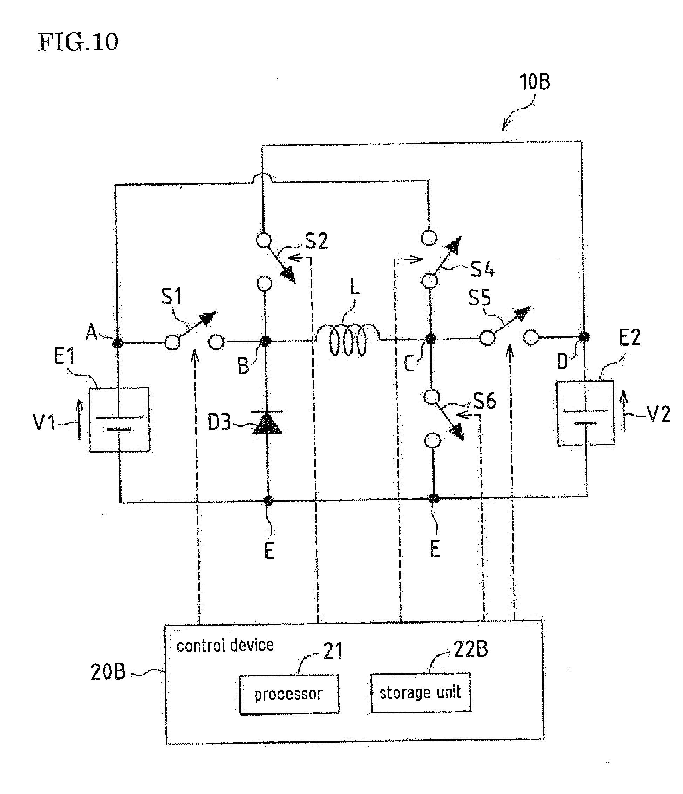

[FIG. 10] FIG. 10 is a circuit diagram showing the DC-DC converter circuit according to a second embodiment of the present invention;

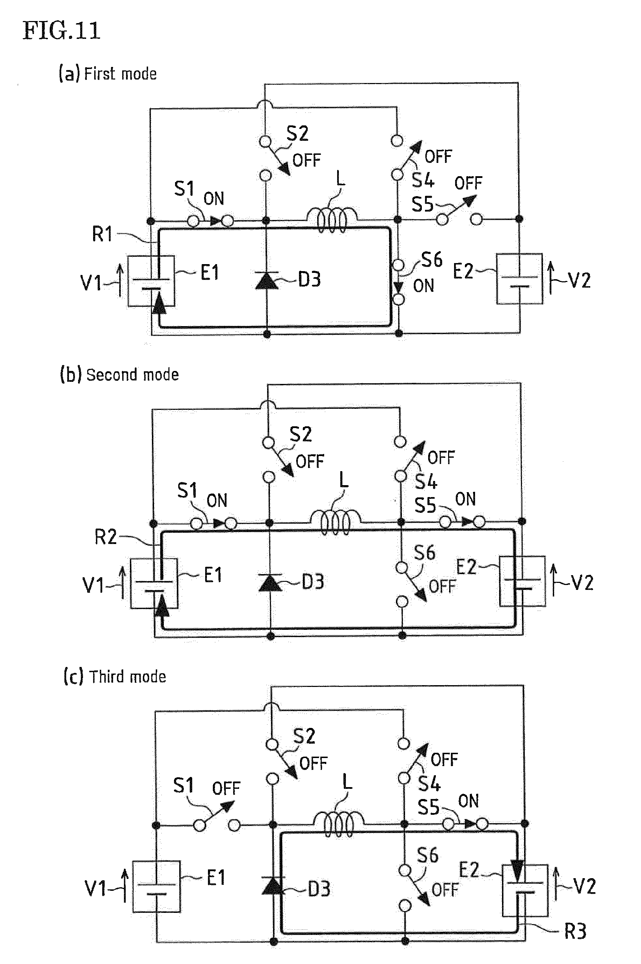

[FIG. 11] FIG. 11 consists of diagrams showing the state in which the DC-DC converter circuit shown in FIG. 10 is operating in powering mode, with part (a) of FIG. 11 showing the first mode, part (b) of FIG. 11 showing the second mode, and part (c) of FIG. 11 showing the third mode;

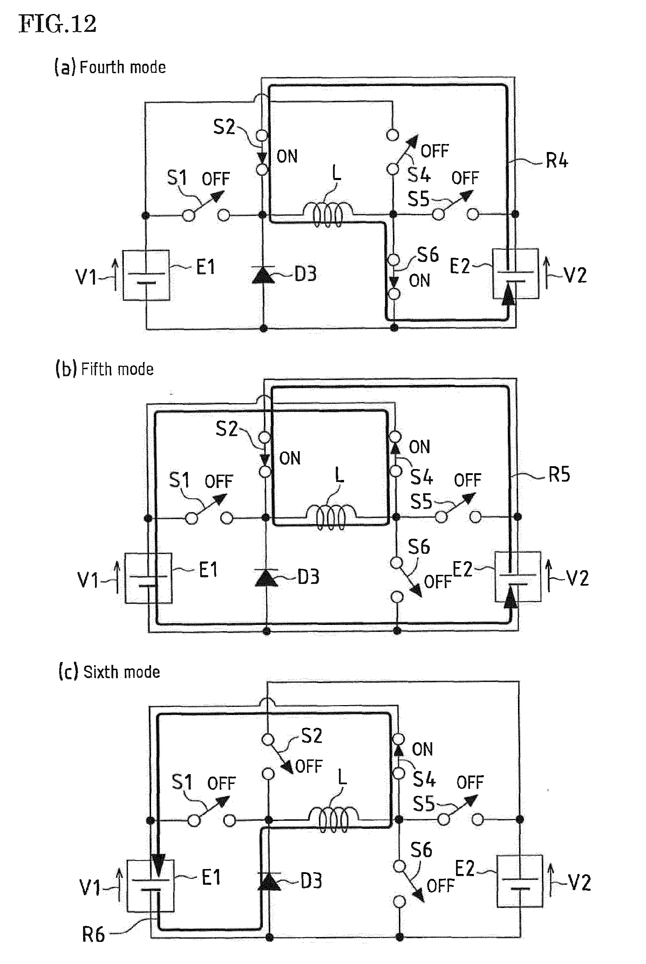

[FIG. 12] FIG. 12 consists of diagrams showing the state in which the DC-DC converter circuit shown in FIG. 10 is operating in regeneration mode, with part (a) of FIG. 12 showing the fourth mode, part (b) of FIG. 12 showing the fifth mode, and part (c) of FIG. 12 showing the sixth mode;

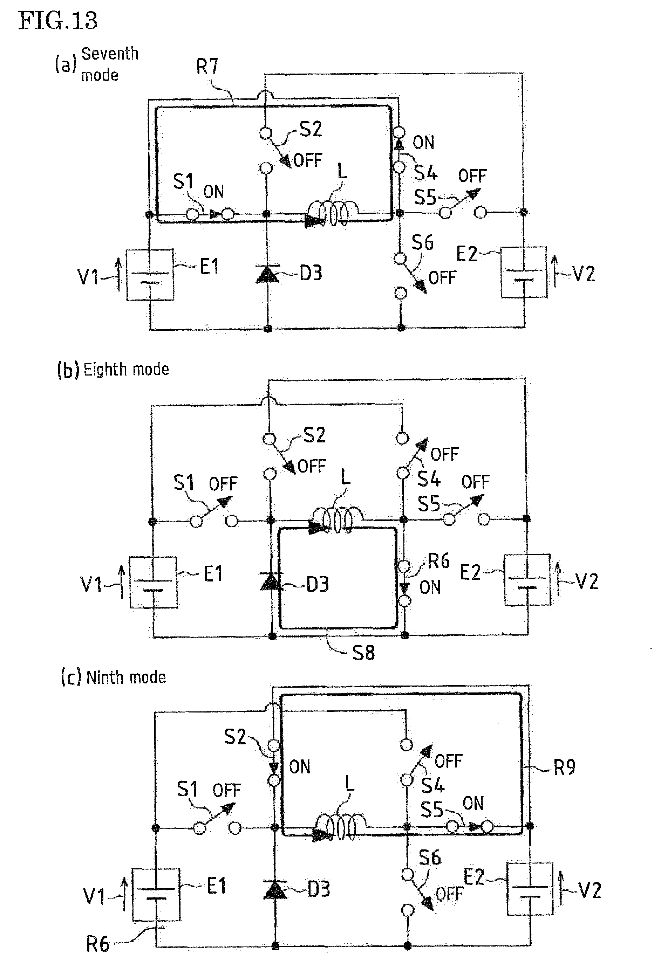

[FIG. 13] FIG. 13 consists of diagrams showing a state in which the DC-DC converter circuit shown in FIG. 10 is operating in freewheeling mode, with part (a) of FIG. 13 showing the seventh mode, part (b) of FIG. 13 showing the eighth mode, and part (c) of FIG. 13 showing the ninth mode;

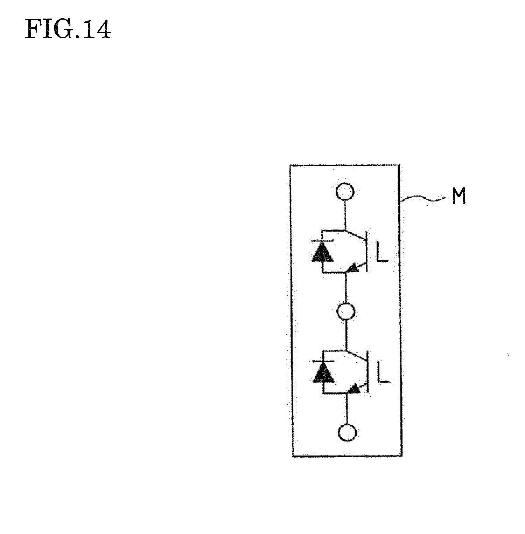

[FIG. 14] FIG. 14 is a diagram of an example of a 2-in-1 module that can be used for the first, second, fourth and fifth semiconductor switches in the DC-DC converter circuit shown in FIG. 10;

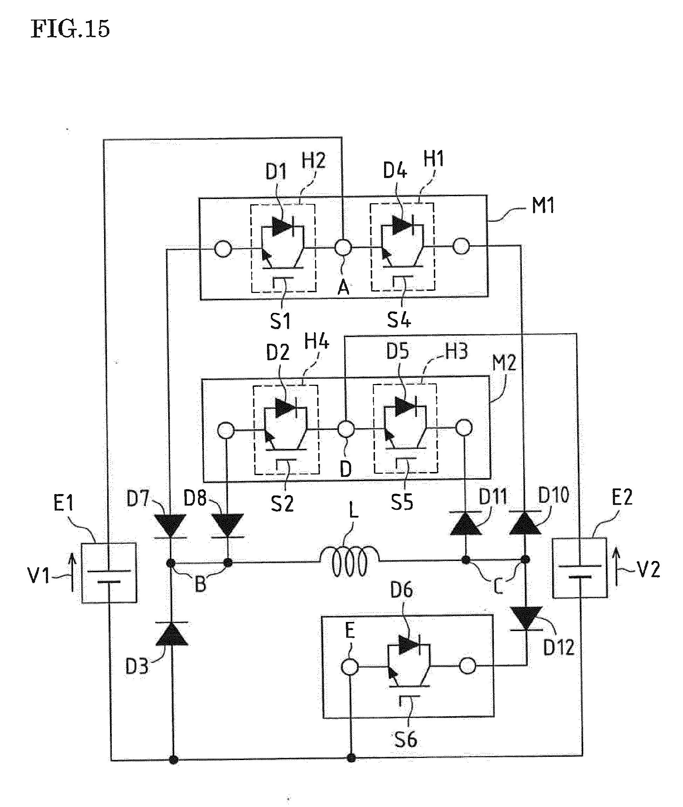

[FIG. 15] FIG. 15 is a circuit diagram of a first example that can constitute a circuit to which a 2-in-1 module can be applied in the DC-DC converter circuit shown in FIG. 10;

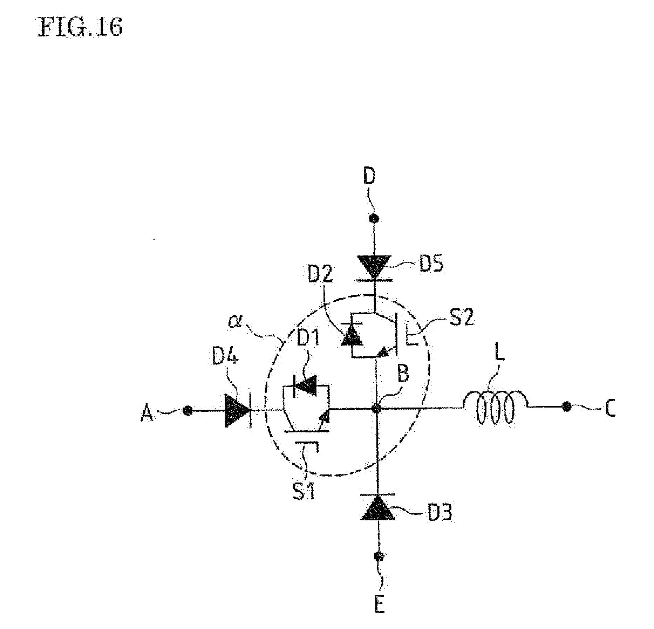

[FIG. 16] FIG. 16 is a circuit diagram of a second example that can constitute a circuit which can reduce the number of gate drive power supplies in the DC-DC converter circuit shown in FIG. 10;

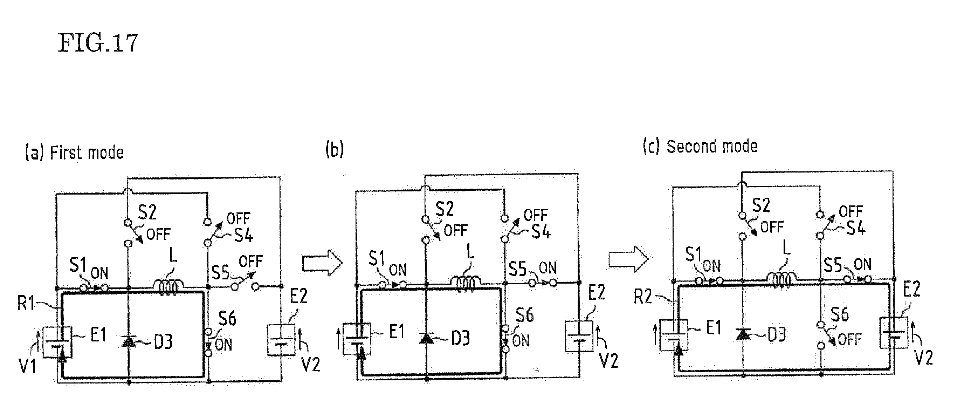

[FIG. 17] FIG. 17 is a state transition diagram showing a case when changing an operation mode from one mode of the first to ninth modes to another mode in the third control example of the DC-DC converter circuit shown in FIG. 10, with part (a) of FIG. 17 showing a state in the first mode, part (b) of FIG. 17 showing a commutation state from the first mode to the second mode, which is a case where there is one possible current path in a commutation state, and part (c) of FIG. 17 showing a state in the second mode;

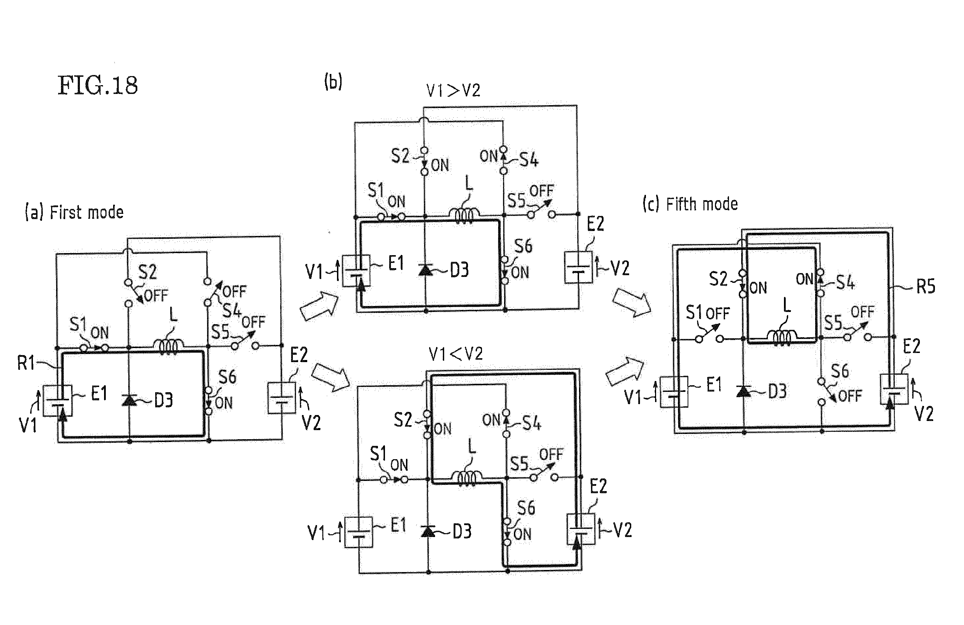

[FIG. 18] FIG. 18 is a state transition diagram showing a case when changing an operation mode from one mode of the first to ninth modes to another mode in the third control example of the DC-DC converter circuit shown in FIG. 10, with part (a) of FIG. 18 showing a state in the first mode, part (b) of FIG. 18 showing a commutation state from the first mode to the fifth mode, which is a case where there are two possible current paths in a commutation state and the current path alters different depending on the magnitude relation between the output voltage of the first voltage supply and the output voltage of the second voltage supply, and part (c) of FIG. 18 showing a state in the fifth mode;
[FIG. 19] FIG. 19 is a circuit diagram showing an example of a conventional DC-DC converter circuit;
[FIG. 20] FIG. 20 consists of diagrams showing the state in which the DC-DC converter circuit shown in FIG. 19 is operating in powering mode; and
[FIG. 21] FIG. 21 consists of diagrams showing the state in which the DC-DC converter circuit shown in FIG. 19 is operating in regeneration mode.

### Description of Embodiments

Embodiments of the present invention will be described with reference to the drawings. The following embodiments are specific examples of the present invention, and are not intended to limit the technical scope of the present invention.

### First Embodiment

FIG. 1 is a circuit diagram showing a DC-DC converter circuit 10A according to a first embodiment of the present invention.

The DC-DC converter circuit 10A shown in FIG. 1 includes first to sixth semiconductor switches S1 to S6 and an inductor L.

The first to sixth semiconductor switches S1 to S6 are each a semiconductor device that allows current to flow in only one direction.

The first to third semiconductor switches S1 to S3 are connected to one end (see connection point B) of the inductor L in a direction such that current flows from the first to third semiconductor switches S1 to S3 into the one end (see connection point B) of the inductor L.

The fourth to sixth semiconductor switches S4 to S6 are connected to the other end (see connection point C) of the inductor L in a direction such that current flows out from the other end (see connection point C) of the inductor L into the fourth to sixth semiconductor switches.

In the DC-DC converter circuit 10A, the positive pole side of a first voltage supply E1 is connected to opposite ends (see connection point A) of the first and fourth semiconductor switches S1 and S4 from the ends of the first and fourth semiconductor switches S1 and S4 connected to the inductor L, and the positive pole side of a second voltage supply E2 is connected to opposite ends (see connection point D) of the second and fifth semiconductor switches S2 and S5 from the ends of the second and fifth semiconductor switches S2 and S5 connected to the inductor L.

In the DC-DC converter circuit 10A, the negative pole side (see connection point E) of the first voltage supply E1 and the negative pole side (see connection point E) of the second voltage supply E2 are both connected to opposite ends of the third and sixth semiconductor switches S3 and S6 from the ends of the third and sixth semiconductor switches S3 and S6 connected to the inductor L.

When the DC-DC converter circuit 10A is applied to a work vehicle, for example, the first and second voltage supplies E1 and E2 can be batteries, capacitors, or other such electric accumulation devices. An inverter circuit or other such power conversion circuit can be connected to the first and second voltage supplies E1 and E2 to operate a motor or other such vehicle electric drive unit.

The DC-DC converter circuit 10A according to this first embodiment further includes a control device 20A. The control device 20A includes a processor 21 such as a CPU (central processing unit) and a storage unit 22A. The storage unit 22A includes a ROM (read-only memory), a RAM (random access memory), or other such memory, and is designed to store various control programs, necessary functions and tables, and various data.

The control device 20A is configured to control the switching operation of the first to sixth semiconductor switches S1 to S6 of the DC-DC converter circuit 10A.

Examples of the operating modes indicating the ON and OFF states of the first to sixth semiconductor switches S1 to S6 in the DC-DC converter circuit 10A according to this first embodiment include the following first to third modes in which operation is in powering mode, and the following fourth to sixth modes in which operation is in regeneration mode.

FIG. 2 consists of diagrams showing a state in which the DC-DC converter circuit 10A shown in FIG. 1 is operating in powering mode. Part (a) of FIG. 2 shows the first mode, part (b) of FIG. 2 shows the second mode, and part (c) of FIG. 2 shows the third mode.

FIG. 3 consists of diagrams showing a state in which the DC-DC converter circuit 10A shown in FIG. 1 is operating in regeneration mode. Part (a) of FIG. 3 shows the fourth mode, part (b) of FIG. 3 shows the fifth mode, and part (c) of FIG. 3 shows the sixth mode.

In powering mode, for example, as shown in part (a) of FIG. 2, the first mode can be one in which that the first and sixth semiconductor switches S1 and S6 are in their ON states, the other second to fifth semiconductor switches S2 to S5 are in their OFF states, and a first current path R1 is formed which goes from the first voltage supply E1, through the first semiconductor switch S1, the inductor L and the sixth semiconductor switch S6, and back to the first voltage supply E1.

As shown in part (b) of FIG. 2, the second mode can be one in which the first and fifth semiconductor switches S1 and S5 are in their ON states, the other second to fourth, and sixth semiconductor switches S2 to S4 and S6 are in their OFF states, and a second current path R2 is formed which goes from the first voltage supply E1, through the first semiconductor switch S1, the inductor L, the fifth semiconductor switch S5 and the second voltage supply E2, and back to the first voltage supply E1.

As shown in part (c) of FIG. 2, the third mode can be one in which the third and fifth semiconductor switches S3 and S5 are in their ON states, the first, second, fourth and sixth semiconductor switches S1, S2, S4 and S6 are in their OFF states, and a third current path R3 is formed which goes from the second voltage supply E2, through the third semiconductor switches S3, the inductor L, the fifth semiconductor switch S5 and back to the second voltage supply E2.

In powering mode, various switching operations can be executed such that at least two modes from among the first mode, second mode, and third mode are switched at a short period (such as one selected from a range of about 10 to 100 kHz), according to the magnitude relation between the output voltage V1 of the first voltage supply E1 and the output voltage V2 of the second voltage supply E2.

More specifically, when the output voltage V1 of the first voltage supply E1 is greater than the output voltage V2 of the second voltage supply E2, a switching operation that switches between the second mode and the third mode can be executed, for example, and when the output voltage V1 of the first voltage supply E1 is less than the output voltage V2 of the second voltage supply E2, a switching operation that switches between the first mode and the second mode can be executed, for example. When the output voltage V1 of the first voltage supply E1 and the output voltage V2 of the second voltage supply E2 are equal, a switching operation that switches between the first mode and the third mode can be executed, for example, or only the second mode can be executed. Further, when the output voltage V1 of the first voltage supply E1 and the output voltage V2 of the second voltage supply E2 are substantially equal (when the absolute value of the difference between the voltage V1 and the voltage V2 is within a specific range), a switching operation that switches between the first mode and the third mode can be executed, or only the second mode can be executed.

In regeneration mode, as shown in part (a) of FIG. 3, for example, the fourth mode can be one in which the second and sixth semiconductor switches S2 and S6 are in their ON states, the first, third, fourth and fifth semiconductor switches S1, S3, S4 and S5 are in their OFF states, and a fourth current path R4 is formed which goes from the second voltage supply E2, through the second semiconductor switch S2, the inductor L, and the sixth semiconductor switch S6, and back to the second voltage supply E2.

As shown in part (b) of FIG. 3, the fifth mode can be one in which the second and fourth semiconductor switches S2 and S4 are in their ON states, the first, third, fifth and sixth semiconductor switches S1, S3, S5 and S6 are in their OFF states, and a fifth current path R5 is formed which goes from the second voltage supply E2, through the second semiconductor switch S2, the inductor L, the fourth semiconductor switch S4 and the first voltage supply E1, and back to the second voltage supply E2.

As shown in part (c) of FIG. 3, the sixth mode can be one in which the third and fourth semiconductor switches S3 and S4 are in their ON states, the first, second, fifth, and sixth semiconductor switches S1, S2, S5 and S6 are in their OFF states, and a sixth current path R6 is formed which goes from the first voltage supply E1, through the third semiconductor switch S3, the inductor L and the fourth semiconductor switch S4, and back to the first voltage supply E1.

In regeneration mode, various switching operations can be executed such that at least two modes from among the fourth mode, fifth mode, and sixth mode are switched at a short period (such as one selected from a range of about 10 to 100 kHz), according to the magnitude relation between the output voltage V1 of the first voltage supply E1 and the output voltage V2 of the second voltage supply E2.

More specifically, when the output voltage V1 of the first voltage supply E1 is greater than the output voltage V2 of the second voltage supply E2, a switching operation that switches between the fourth mode and the fifth mode can be executed, for example, and when the output voltage V1 of the first voltage supply E1 is less than the output voltage V2 of the second voltage supply E2, a switching operation that switches between the fifth mode and the sixth mode can be executed, for example. When the output voltage V1 of the first voltage supply E1 and the output voltage V2 of the second voltage supply E2 are equal, a switching operation that switches between the fourth mode and the sixth mode can be executed, for example, or only the fifth mode can be executed. Further, when the output voltage V1 of the first voltage supply E1 and the output voltage V2 of the second voltage supply E2 are substantially equal (when the absolute value of the difference between the voltage V1 and the voltage V2 is within a specific range), a switching operation that switches between the fourth mode and the sixth mode can be executed, or only the fifth mode can be executed.

As the operating modes indicating the ON and OFF states of the first to sixth semiconductor switches S1 to S6 in the DC-DC converter circuit 10A according to this first embodiment, the following seventh to ninth modes in which operation is in freewheeling mode may be executed.

FIG. 4 consists of diagrams showing a state in which the DC-DC converter circuit 10A shown in FIG. 1 is operating in freewheeling mode. Part (a) of FIG. 4 shows the seventh mode, part (b) of FIG. 4 shows the eighth mode, and part (c) of FIG. 4 shows the ninth mode.

In freewheeling mode, for example, as shown in part (a) of FIG. 4, the seventh mode can be one in which the first and fourth semiconductor switches S1 and S4 are in their ON states, the second, third, fifth and sixth semiconductor switches S2, S3, S5 and S6 are in their OFF states, and a seventh current path R7 is formed which freewheels through the inductor L, the fourth semiconductor switch S4 and the first semiconductor switch S1.

As shown in part (b) of FIG. 4, the eighth mode can be one in which the third and sixth semiconductor switches S3 and S6 are in their ON states, the first, second, fourth, and fifth semiconductor switches S1, S2, S4 and S5 are in their OFF states, and an eighth current path R8 is formed which freewheels through the inductor L, the sixth semiconductor switch S6, and the third semiconductor switch S3.

As shown in part (c) of FIG. 4, the ninth mode can be one in which the second and fifth semiconductor switches S2 and S5 are in their ON states, the first, third, fourth and sixth semiconductor switches S1, S3, S4 and S6 are in their OFF states, and a ninth current path R9 is formed which freewheels through the inductor L, the fifth semiconductor switches S5, and the second semiconductor switch S2.

The output voltage V1 of the first voltage supply E1 and the output voltage V2 of the second voltage supply E2 can be measured with a voltage meter (not shown).

As described above, with the DC-DC converter circuit 10A according to the first embodiment of the present invention, the output voltages V1 and V2 can be stepped up and down in both directions between the first voltage supply E1 and the second voltage supply E2. Also, power can be supplied in both directions between the first voltage supply E1 and the second voltage supply E2. Moreover, current can flow through the inductor L only in a prescribed direction. Thus, it is not necessary to reverse current flowing the inductor L when switching the mode between powering mode and regeneration mode by operation switching between the ON state and the OFF state of the semiconductor switches S1 to S6. Accordingly, time required for mode switching can be reduced and a rapid mode switching process can be achieved. Also, since current flows through the inductor L only in a prescribed direction, an electromagnetic offset type of inductor L can be used, which makes it possible to achieve compactness. Furthermore, current only needs to pass through the first and sixth semiconductor switches S1 and S6 in the first mode (see part (a) of FIG. 2), through the first and fifth semiconductor switches S1 and S5 in the second mode (see part (b) of FIG. 2), through the third and fifth semiconductor switches S3 and S5 in the third mode (see part (c) of FIG. 2). Also, current only needs to pass through the second and sixth semiconductor switches S2 and S6 in the fourth mode (see part (a) of FIG. 3), through the second and fourth semiconductor switches S2 and S4 in the fifth mode (see part (b) of FIG. 3), through the third and fourth semiconductor switches S3 and S4 in the sixth mode (see part (c) of FIG. 3). In other words, in any mode, from the first to the sixth (whether in powering mode or regeneration mode), current can be passed through at least two of the switching elements (two third of the switching elements compared to the conventional art), conduction loss can be correspondingly reduced, and this affords an increase in power conversion efficiency.

In particular, the shorter is the switching period of each mode, the greater is the switching loss with the first to sixth semiconductor switches S1 to S6, so the above-mentioned effect is correspondingly greater.

For example, a reverse-blocking IGBT, MOSFET, GTO or the like can be used as a semiconductor switch that can serve as the first to sixth semiconductor switches S1 to S6.

The first to sixth semiconductor switches S1 to S6 can also be a 2-in-1 module in which two reverse conducting semiconductor elements are connected in series and integrated.

FIG. 5 is a diagram of an example of a 2-in-1 module that can be used for the first to sixth semiconductor switches S1 to S6 in the DC-DC converter circuit 10A shown in FIG. 1. In the example shown in FIG. 5, the 2-in-1 module M is constituted by reverse conducting IGBT elements. This is not the only option, however, and the 2-in-1 module may instead be constituted by reverse conducting MOSFET elements, or reverse conducting GTO elements.

The following first example can be given as a example that can constitute a circuit to which a 2-in-1 module can be applied with the DC-DC converter circuit 10A.

### First Example

FIG. 6 is a circuit diagram of a first example that can constitute a circuit to which a 2-in-1 module can be applied in the DC-DC converter circuit 10A shown in FIG. 1. The connection points A to D shown in FIG. 6 correspond to the respective connection points A to D shown in FIG. 1. The same holds true for the circuit in FIG. 7 discussed below.

As shown in FIG. 6, in the first example, the DC-DC converter circuit 10A further includes first to twelfth diodes D1 to D12.

The first to sixth diodes D1 to D6 are connected in parallel to the first to sixth semiconductor switches S1 to S6 so that each of the first to sixth diodes D1 to D6 allows current to flow in the opposite direction from the direction of on and off control of current by each of the first to sixth semiconductor switches S1 to S6.

The seventh diode D7 is connected between the first semiconductor switch S1 and the inductor L (see connection point B) so that the seventh diode D7 allows current to flow in the opposite direction from that of the first diode D1. The eight diode D8 is connected between the second semiconductor switch S2 and the inductor L (see connection point B) so that the eight diode D8 allows current to flow in the opposite direction from that of the second diode D2. The ninth diode D9 is connected between the third semiconductor switch S3 and the inductor L (see connection point B) so that the ninth diode D9 allows current to flow in the opposite direction from that of the third diode D3.

The tenth diode D10 is connected between the fourth semiconductor switch S4 and the inductor L (see connection point C) so that the tenth diode D10 allows current to flow in the opposite direction from that of the fourth diode D4. The eleventh diode D11 is connected between the fifth semiconductor switch S5 and the inductor L (see connection point C) so that the eleventh diode D11 allows current to flow in the opposite direction from that of the fifth diode D5. The twelfth diode D12 is connected between the sixth semiconductor switch S6 and the inductor L (see connection point C) so that the twelfth diode D12 allows current to flow in the opposite direction from that of the sixth diode D6.

In this first example, the semiconductor element composed of the fourth semiconductor switch S4 and the fourth diode D4 can serve as a first reverse conducting semiconductor element H1 of the upper arm, and the semiconductor element composed of the first semiconductor switch S1 and the first diode D1 can serve as a second reverse conducting semiconductor element H2 of the lower arm.

Consequently, with the DC-DC converter circuit 10A, the first reverse conducting semiconductor element H1 and the second reverse conducting semiconductor element H2 can be connected in series and integrated for use as a 2-in-1 module M1.

Also, the semiconductor element composed of the fifth semiconductor switch S5 and the fifth diode D5 can serve as a third reverse conducting semiconductor element H3 of the upper arm, and the semiconductor element composed of the second semiconductor switch S2 and the second diode D2 can serve as a fourth reverse conducting semiconductor element H4 of the lower arm.

Consequently, with the DC-DC converter circuit 10A, the third reverse conducting semiconductor element H3 and the fourth reverse conducting semiconductor element H4 can be connected in series and integrated for use as a 2-in-1 module M2.

Furthermore, the semiconductor element composed of the sixth semiconductor switch S6 and the sixth diode D6 can serve as a fifth reverse conducting semiconductor element H5 of the upper arm, and the semiconductor element composed of the third semiconductor switch S3 and the third diode D3 can serve as a sixth reverse conducting semiconductor element H6 of the lower arm.

Consequently, with the DC-DC converter circuit 10A, the fifth reverse conducting semiconductor element H5 and the sixth reverse conducting semiconductor element H6 can be connected in series and integrated for use as a 2-in-1 module M3.

Thus, since the 2-in-1 modules M1 to M3 can thus be used, a circuit configuration that is more convenient to use can be realized.

With the circuit configuration in the first example, as shown in FIG. 6, each of anodes of the first to fourth diodes D1 to D3 cannot be shared with any of the first to third diodes D1 to D3. For example, when the first to third semiconductor switches S1 to S3 are IGBTs, each of emitters of the IGBTs cannot be shared with any of the IGBTs. Also, when the first to fourth semiconductor switches S1 to S3 are MOSFETs, each of sources of the MOSFETs cannot be shared with any of the MOSFETs. In addition, when the first to fourth semiconductor switches S1 to S3 are GTOs, each of cathodes of the GTOs cannot be shared with any of the GTOs.

Accordingly, a gate drive power supply (not shown) has to be provided to each of the first to third semiconductor switches S1 to S3, that is, a total of three gate drive power supplies are needed.

From this standpoint, the following second example can be given as an example that can constitute a circuit with which the number of gate drive power supplies can be reduced with the DC-DC converter circuit 10A.

### Second Example

FIG. 7 is a circuit diagram of a second example that can constitute a circuit which can reduce the number of gate drive power supplies in the DC-DC converter circuit 10A shown in FIG. 1. It should be noted that FIG. 7 shows a part on the connection point B of the inductor L in the DC-DC converter circuit 10A.

With this second example, as shown in FIG. 7, the DC-DC converter circuit 10A further includes first to sixth diodes D1 to D6.

The first to third diodes D1 to D3 are connected in parallel to the first to third semiconductor switches S1 to S3 so that each of the first to third diodes D1 to D3 allows current to flow in the opposite direction from the direction of on and off control of current by each of the first to third semiconductor switches S1 to S3.

The fourth diode D4 is connected between the first semiconductor switch S1 and the positive pole side (see connection point A) of the first voltage supply E1 so that the fourth diode D4 allows current to flow in the opposite direction from that of the first diode D1.

The fifth diode D5 is connected between the second semiconductor switch S2 and the positive pole side (see connection point D) of the second voltage supply E2 so that the fifth diode D5 allows current to flow in the opposite direction from that of the second diode D2.

The sixth diode D6 is connected between the third semiconductor switch S3 and the negative pole side (see connection point E) of the first and second voltage supply E1 and E2 so that the sixth diode D6 allows current to flow in the opposite direction from that of the third diode D3.

In this second example, the anode side of the first diode D1, the anode side of the second diode D2 and the anode side of the third diode D3 are connected, so an anode can be shared with the first diode D1, the second diode D2 and the third diode D3 (see the broken line portion α).

Consequently, with the DC-DC converter circuit 10A, the same (shared) gate drive power supply (not shown) can be used for the first semiconductor switch S1, the second semiconductor switch S2 and the third semiconductor switch S3. Thus, only one gate drive power supply is needed for the first semiconductor switch S1, the second semiconductor switch S2 and the third semiconductor switch S3.

Next, control examples by the control device 20A of the first to sixth semiconductor switches S1 to S6 will be described.

In the first embodiment, in a case where current is flowing through the inductor L, when the first to third semiconductor switches S1 to S3 are all in their OFF states, and/or the fourth to sixth semiconductor switches S4 to S6 are all in their OFF states, a high voltage is applied to the first to sixth semiconductor switches S1 to S6, so that any of the first to sixth semiconductor switches S1 to S6 can be damaged.

From this standpoint, the DC-DC converter circuit 10A includes a protection function that performs first to third control examples of the following switching operation with the control device 20A.

It should be noted that in the following first to third control examples, current flowing through the inductor L can be measured with an ammeter (not shown). The control device 20A can be aware of whether or not current is flowing through the inductor L based on detection results of the ammeter.

### First Control Example

In the first control example, the control device 20A is configured to control the control voltages of the first to sixth semiconductor switches S1 to S6 so that when current is flowing through the inductor L, at least one of the first to third semiconductor switches S1 to S3 and at least one of the fourth to sixth semiconductor switches S4 to S6 are constantly in their ON states.

Thus, a current path including the inductor L can be secured when current is flowing through the inductor L.

For example, in the case where current is flowing through the inductor L, when the first semiconductor switch S1 and the sixth semiconductor switch S6 are in their ON states, the first current path R1 (see part (a) of FIG. 2) is formed. When the first semiconductor switch S1 and the fifth semiconductor switch S5 are in their ON states, the second current path R2 (see part (b) of FIG. 2) is formed. When the third semiconductor switch S3 and the fifth semiconductor switch S5 are in their ON states, the third current path R3 (see part (c) of FIG. 2) is formed.

For example, in the case where current is flowing through the inductor L, when the second semiconductor switch S2 and the sixth semiconductor switch S6 are in their ON states, the fourth current path R4 (see part (a) of FIG. 3) is formed. When the second semiconductor switch S2 and the fourth semiconductor switch S4 are in their ON states, the fifth current path R5 (see part (b) of FIG. 3) is formed. When the third semiconductor switch S3 and the fourth semiconductor switch S4 are in their ON states, the sixth current path R6 (see part (c) of FIG. 3) is formed.

For example, in the case where current is flowing through the inductor L, when the first semiconductor switch S1 and the fourth semiconductor switch S4 are in their ON states, the seventh current path R7 (see part (a) of FIG. 4) is formed. When the third semiconductor switch S3 and the sixth semiconductor switch S6 are in their ON states, the eighth current path R8 (see part (b) of FIG. 4) is formed. When the second semiconductor switch S2 and the fifth semiconductor switch S5 are in their ON states, the ninth current path R9 (see part (c) of FIG. 4) is formed.

Thus, in the first control example, it is possible to avoid all of the first to third semiconductor switches S1 to S3 being in their OFF states, and/or all of the fourth to sixth semiconductor switches S4 to S6 being in their OFF states, which prevents any of the first to sixth semiconductor switches S1 to S6 from being damaged due to high voltage.

### Second Control Example

In the second control example, the control device 20A is configured to control the control voltages of the first to sixth semiconductor switches S1 to S6 in the following manner when current is flowing through the inductor L: Before turning off one or two of the first to third semiconductor switches S1 to S3, at least one of the first to third semiconductor switches S1 to S3 other than the semiconductor switch to be turned off is turned on in advance, and before turning off one or two of the fourth to sixth semiconductor switches S4 to S6, at least one of the fourth to sixth semiconductor switches S4 to S6 other than the semiconductor switch to be turned off is turned on in advance.

Thus, a current path including the inductor L can be secured when current is flowing through the inductor L.

For example, when current is flowing through the inductor L, before turning off the second and third semiconductor switches S2 and S3 that should be turned off, the other first semiconductor switch S1 is turned on in advance, and before turning off the fourth and fifth semiconductor switches S4 and S5 that should be turned off, the other sixth semiconductor switch S6 is turned on in advance. In this case, all of the first to sixth semiconductor switches S1 to S6 become in their ON states, and when the output voltage V1 of the first voltage supply E1 is greater than the output voltage V2 of the second voltage supply E2, the first current path R1 (see part (a) of FIG. 2) is formed. When the output voltage V1 of the first voltage supply E1 is less than the output voltage V2 of the second voltage supply E2, the fourth current path R4 (see part (a) of FIG. 3) is formed.

Thus, in the second control example, it is possible to avoid all of the first to third semiconductor switches S1 to S3 being in their OFF states, and/or all of the fourth to sixth semiconductor switches S4 to S6 being in their OFF states, which prevents any of the first to sixth semiconductor switches S1 to S6 from being damaged due to high voltage.

### Third Control Example

In the third control example, the control device 20A is configured to control the control voltages of the first to sixth semiconductor switches S1 to S6 in the following manner when current is flowing through the inductor L: When changing an operation mode indicating an ON state or an OFF state of the first to sixth semiconductor switches S1 to S6, all of the semiconductor switches that are in their ON states in a pre-change operation mode remain in their ON states for a prescribed period of time after a change of the operation mode, or all of the semiconductor switches that should be in their ON states in a post-change operation mode are turned on a prescribed period of time before a change of the operation mode.

FIGS. 8 and 9 are state transition diagrams showing cases when changing an operation mode from one of the first to ninth modes to another mode in the third control example of the DC-DC converter circuit 10A shown in FIG. 1.

Part (a) of FIG. 8 shows a state in the first mode, part (b) of FIG. 8 shows a commutation state from the first mode to the second mode, which is a case where there is one possible current path in a commutation state, and part (c) of FIG. 8 shows a state in the second mode.

In the state shown in part (a) of FIG. 8, the first current path R1 (see part (a) of FIG. 2) is formed with the first mode.

Then, in the state shown in part (b) of FIG. 8, all of the semiconductor switches that are in their ON states in a pre-change operation mode (herein, the first and sixth semiconductor switches S1 and S6) remain in their ON states for a prescribed period of time after the change of the operation mode. Alternatively, all of the semiconductor switches that should be in their ON states in a post-change operation mode (herein, the first and fifth semiconductor switches S1 and S5) are turned on a prescribed period of time before the change of the operation mode. At this time, the first, fifth and sixth semiconductor switches S1, S5 and S6 are in their ON states, and, as a result, the first current path R1 (see part (a) of FIG. 2) is formed.

The state shown in part (c) of FIG. 8 shows the second mode, and the second current path R2 (see part (b) of FIG. 2) is formed.

Part (a) of FIG. 9 shows a state in the first mode, part (b) of FIG. 9 shows a commutation state from the first mode to the fifth mode, which is a case where there are two possible current paths in a commutation state and the current path alters depending on the magnitude relation between the output voltage V1 of the first voltage supply E1 and the output voltage V2 of the second voltage supply E2, and part (c) of FIG. 9 shows a state in the fifth mode.

In the state shown in part (a) of FIG. 9, the first current path R1 (see part (a) of FIG. 2) is formed with the first mode.

Then, in the state shown in part (b) of FIG. 9, all of the semiconductor switches that are in their ON states in a pre-change operation mode (herein, the first and sixth semiconductor switches S1 and S6) remain in their ON states for a prescribed period of time after a change of the operation mode. Alternatively, all of the semiconductor switches that should be in their ON states in a post-change operation mode (herein, the second and fourth semiconductor switches S2 and S4) are turned on a prescribed period of time before a change of the operation mode. At this time, the first, second, fourth and sixth semiconductor switches S1, S2, S4 and S6 are in their ON states. When the output voltage V1 of the first voltage supply E1 is greater than the output voltage V2 of the second voltage supply E2, the first current path R1 (see part (a) of FIG. 2) is formed. When the output voltage V1 of the first voltage supply E1 is less than the output voltage V2 of the second voltage supply E2, the fourth current path R4 (see part (a) of FIG. 3) is formed.

The state shown in part (c) of FIG. 9 shows the fifth mode, and the fifth current path R5 (see part (b) of FIG. 3) is formed.

Thus, in the third control example, it is possible to avoid all of the first to third semiconductor switches S1 to S3 being in their OFF states, and/or all of the fourth to sixth semiconductor switches S4 to S6 being in their OFF states, which prevents any of the first to sixth semiconductor switches S1 to S6 from being damaged due to high voltage.

### Second Embodiment

FIG. 10 is a circuit diagram showing the DC-DC converter circuit 10B according to a second embodiment of the present invention. In FIG. 10 and in FIGS. 11 to 18 (discussed below), those members constituted substantially the same as in the first embodiment will be numbered the same.

The DC-DC converter circuit 10B shown in FIG. 10 includes first, second, fourth, fifth and sixth semiconductor switches S1, S2, S4, S5 and S6, a third diode D3 and an inductor L.

The first, second, fourth, fifth and sixth semiconductor switches S1, S2, S4, S5 and S6 are each a semiconductor device that allows current to flow in only one direction.

The first semiconductor switch S1, second semiconductor switch S2, and third diode D3 are connected to one end (see connection point B) of the inductor L in a direction such that current flows from the first semiconductor switch S1, second semiconductor switch S2, and third diode D3 into the one end (see connection point B) of the inductor L.

The fourth to sixth semiconductor switches S4 to S6 are connected to the other end (see connection point C) of the inductor L in a direction such that current flows out from the other end (see connection point C) of the inductor L into the fourth to sixth semiconductor switches S4 to S6.

In the DC-DC converter circuit 10B, the positive pole side of a first voltage supply E1 is connected to opposite ends (see connection point A) of the first and fourth semiconductor switches S1 and S4 from the ends of the first and fourth semiconductor switches S1 and S4 connected to the inductor L, and the positive pole side of a second voltage supply E2 is connected to opposite ends (see connection point D) of the second and fifth semiconductor switches S2 and S5 from the ends of the second and fifth semiconductor switches S2 and S5 connected to the inductor L.

In the DC-DC converter circuit 10B, the negative pole side (see connection point E) of the first voltage supply E1 and the negative pole side (see connection point E) of the second voltage supply E2 are both connected to opposite ends of the third and sixth semiconductor switches S3 and S6 from the ends of the third and sixth semiconductor switches S3 and S6 connected to the inductor L.

When the DC-DC converter circuit 10B is applied to a work vehicle, for example, the first and second voltage supplies E1 and E2 can be batteries, capacitors, or other such electric accumulation devices. An inverter circuit or other such power conversion circuit can be connected to the first and second voltage supplies E1 and E2 to operate a motor or other such vehicle electric drive unit.

The DC-DC converter circuit 10B according to this second embodiment further includes a control device 20B. The control device 20B includes a processor 21 such as a CPU (central processing unit) and a storage unit 22B. The storage unit 22B includes a ROM (read-only memory), a RAM (random access memory), or other such memory, and is designed to store various control programs, necessary functions and tables, and various data.

The control device 20B is configured to control the switching operation of the first, second, fourth, fifth and sixth semiconductor switches S1, S2, S4, S5 and S6 of the DC-DC converter circuit 10B.

Examples of the operating modes indicating the ON and OFF states of the first, second, fourth, fifth and sixth semiconductor switches S1, S2, S4, S5 and S6 in the DC-DC converter circuit 10B according to this second embodiment include the following first to third modes in which operation is in powering mode, and the following fourth to sixth modes in which operation is in regeneration mode.

FIG. 11 consists of diagrams showing a state in which the DC-DC converter circuit 10B shown in FIG. 10 is operating in powering mode. Part (a) of FIG. 11 shows the first mode, part (b) of FIG. 11 shows the second mode, and part (c) of FIG. 11 shows the third mode.

FIG. 12 consists of diagrams showing a state in which the DC-DC converter circuit 10B shown in FIG. 10 is operating in regeneration mode. Part (a) of FIG. 12 shows the fourth mode, part (b) of FIG. 12 shows the fifth mode, and part (c) of FIG. 12 shows the sixth mode.

In powering mode, for example, as shown in part (a) of FIG. 11, the first mode can be one in which that the first and sixth semiconductor switches S1 and S6 are in their ON states, the other second, fourth, fifth semiconductor switches S2, S4 and S5 are in their OFF states, and a first current path R1 is formed which goes from the first voltage supply E1, through the first semiconductor switch S1, the inductor L and the sixth semiconductor switch S6, and back to the first voltage supply E1.

As shown in part (b) of FIG. 11, the second mode can be one in which the first and fifth semiconductor switches S1 and S5 are in their ON states, the other second, fourth and sixth semiconductor switches S2, S4 and S6 are in their OFF states, and a second current path R2 is formed which goes from the first voltage supply E1, through the first semiconductor switch S1, the inductor L, the fifth semiconductor switch S5 and the second voltage supply E2, and back to the first voltage supply E1.

As shown in part (c) of FIG. 11, the third mode can be one in which the fifth semiconductor switch S5 is in its ON state, the other first, second, fourth and sixth semiconductor switches S1, S2, S4 and S6 are in their OFF states, and a third current path R3 is formed which goes from the second voltage supply E2, through the third diode D3, the inductor L, the fifth semiconductor switch S5 and back to the second voltage supply E2.

In powering mode, various switching operations can be executed such that at least two modes from among the first mode, second mode, and third mode are switched at a short period (such as one selected from a range of about 10 to 100 kHz), according to the magnitude relation between the output voltage V1 of the first voltage supply E1 and the output voltage V2 of the second voltage supply E2.

More specifically, when the output voltage V1 of the first voltage supply E1 is greater than the output voltage V2 of the second voltage supply E2, a switching operation that switches between the second mode and the third mode can be executed, for example, and when the output voltage V1 of the first voltage supply E1 is less than the output voltage V2 of the second voltage supply E2, a switching operation that switches between the first mode and the second mode can be executed, for example. When the output voltage V1 of the first voltage supply E1 and the output voltage V2 of the second voltage supply E2 are equal, a switching operation that switches between the first mode and the third mode can be executed, for example, or only the second mode can be executed. Further, when the output voltage V1 of the first voltage supply E1 and the output voltage V2 of the second voltage supply E2 are substantially equal (when the absolute value of the difference between the voltage V1 and the voltage V2 is within a specific range), a switching operation that switches between the first mode and the third mode can be executed, or only the second mode can be executed.

In regeneration mode, as shown in part (a) of FIG. 12, for example, the fourth mode can be one in which the second and sixth semiconductor switches S2 and S6 are in their ON states, the first, fourth and fifth semiconductor switches S1, S4 and S5 are in their OFF states, and a fourth current path R4 is formed which goes from the second voltage supply E2, through the second semiconductor switch S2, the inductor L, and the sixth semiconductor switch S6, and back to the second voltage supply E2.

As shown in part (b) of FIG. 12, the fifth mode can be one in which the second and fourth semiconductor switches S2 and S4 are in their ON states, the first, fifth and sixth semiconductor switches S1, S5 and S6 are in their OFF states, and a fifth current path R5 is formed which goes from the second voltage supply E2, through the second semiconductor switch S2, the inductor L, the fourth semiconductor switch S4 and the first voltage supply E1, and back to the second voltage supply E2.

As shown in part (c) of FIG. 12, the sixth mode can be one in which the fourth semiconductor switch S4 is in its ON state, the first, second, fifth, and sixth semiconductor switches S1, S2, S5 and S6 are in their OFF states, and a sixth current path R6 is formed which goes from the first voltage supply E1, through the third diode D3, the inductor L and the fourth semiconductor switch S4, and back to the first voltage supply E1.

In regeneration mode, various switching operations can be executed such that at least two modes from among the fourth mode, fifth mode, and sixth mode are switched at a short period (such as one selected from a range of about 10 to 100 kHz), according to the magnitude relation between the output voltage V1 of the first voltage supply E1 and the output voltage V2 of the second voltage supply E2.

More specifically, when the output voltage V1 of the first voltage supply E1 is greater than the output voltage V2 of the second voltage supply E2, a switching operation that switches between the fourth mode and the fifth mode can be executed, for example, and when the output voltage V1 of the first voltage supply E1 is less than the output voltage V2 of the second voltage supply E2, a switching operation that switches between the fifth mode and the sixth mode can be executed, for example. When the output voltage V1 of the first voltage supply E1 and the output voltage V2 of the second voltage supply E2 are equal, a switching operation that switches between the fourth mode and the sixth mode can be executed, for example, or only the fifth mode can be executed. Further, when the output voltage V1 of the first voltage supply E1 and the output voltage V2 of the second voltage supply E2 are substantially equal (when the absolute value of the difference between the voltage V1 and the voltage V2 is within a specific range), a switching operation that switches between the fourth mode and the sixth mode can be executed, or only the fifth mode can be executed.

As the operating modes indicating the ON and OFF states of the first, second, fourth, fifth and sixth semiconductor switches S1, S2, S4, S5 and S6 in the DC-DC converter circuit 10B according to this second embodiment, the following seventh to ninth modes in which operation is in freewheeling mode may be executed.

FIG. 13 consists of diagrams showing a state in which the DC-DC converter circuit 10B shown in FIG. 10 is operating in freewheeling mode. Part (a) of FIG. 13 shows the seventh mode, part (b) of FIG. 13 shows the eighth mode, and part (c) of FIG. 13 shows the ninth mode.

In freewheeling mode, for example, as shown in part (a) of FIG. 13, the seventh mode can be one in which the first and fourth semiconductor switches S1 and S4 are in their ON states, the other second, fifth and sixth semiconductor switches S2, S5 and S6 are in their OFF states, and a seventh current path R7 is formed which freewheels through the inductor L, the fourth semiconductor switch S4 and the first semiconductor switch S1.

As shown in part (b) of FIG. 13, the eighth mode can be one in which the sixth semiconductor switch S6 is in its ON state, the other first, second, fourth, and fifth semiconductor switches S1, S2, S4 and S5 are in their OFF states, and an eighth current path R8 is formed which freewheels through the inductor L, the sixth semiconductor switch S6, and the third diode D3.

As shown in part (c) of FIG. 13, the ninth mode can be one in which the second and fifth semiconductor switches S2 and S5 are in their ON states, the first, fourth and sixth semiconductor switches S1, S4 and S6 are in their OFF states, and a ninth current path R9 is formed which freewheels through the inductor L, the fifth semiconductor switches S5, and the second semiconductor switch S2.

It should be noted that the output voltage V1 of the first voltage supply E1 and the output voltage V2 of the second voltage supply E2 can be measured with a voltage meter (not shown).

As described above, with the DC-DC converter circuit 10B according to the second embodiment of the present invention, the output voltages V1 and V2 can be stepped up and down in both directions between the first voltage supply E1 and the second voltage supply E2. Also, power can be supplied in both directions between the first voltage supply E1 and the second voltage supply E2. Moreover, current can flow through the inductor L only in a prescribed direction. Thus, it is not necessary to reverse current flowing the inductor L when switching the mode between powering mode and regeneration mode by operation switching between the ON state and the OFF state of the semiconductor switches S1, S2, S4, S5 and S6. Accordingly, time required for mode switching can be reduced and a rapid mode switching process can be achieved. Also, since current flows through the inductor L only in a prescribed direction, an electromagnetic offset type of inductor L can be used, which makes it possible to achieve compactness. Furthermore, current only needs to pass through the first and sixth semiconductor switches S1 and S6 in the first mode (see part (a) of FIG. 11), through the first and fifth semiconductor switches S1 and S5 in the second mode (see part (b) of FIG. 11), through the third diode D3 and the fifth semiconductor switch S5 in the third mode (see part (c) of FIG. 11). Also, current only needs to pass through the second and sixth semiconductor switches S2 and S6 in the fourth mode (see part (a) of FIG. 12), through the second and fourth semiconductor switches S2 and S4 in the fifth mode (see part (b) of FIG. 12), through the third diode D3 and the fourth semiconductor switch S4 in the sixth mode (see part (c) of FIG. 12). In other words, in any mode, from the first to the sixth (whether in powering mode or regeneration mode), current can be passed through at least two of the switching elements (two third of the switching elements compared to the conventional art), conduction loss can be correspondingly reduced, and this affords an increase in power conversion efficiency.

In particular, the shorter is the switching period of each mode, the greater is the switching loss with the first, second, fourth, fifth and sixth semiconductor switches S1, S2, S4, S5 and S6, so the above-mentioned effect is correspondingly greater.

For example, a reverse-blocking IGBT, MOSFET, GTO or the like can be used as a semiconductor switch for first, second, fourth, fifth and sixth semiconductor switches S1, S2, S4, S5 and S6.

The first, second, fourth, and fifth semiconductor switches S1, S2, S4, and S5 can also be a 2-in-1 module in which two reverse conducting semiconductor elements are connected in series and integrated.

FIG. 14 is a diagram of an example of a 2-in-1 module that can be used for the first, second, fourth, and fifth semiconductor switches S1, S2, S4, and S5 in the DC-DC converter circuit 10B shown in FIG. 10. In the example shown in FIG. 14, the 2-in-1 module M is constituted by reverse conducting IGBT elements. This is not the only option, however, and the 2-in-1 module may instead be constituted by reverse conducting MOSFET elements, or reverse conducting GTO elements.

The following first example can be given as a example that can constitute a circuit to which a 2-in-1 module can be applied with the DC-DC converter circuit 10B.

### First Example

FIG. 15 is a circuit diagram of a first example that can constitute a circuit to which a 2-in-1 module can be applied in the DC-DC converter circuit 10B shown in FIG. 10. The connection points A to D shown in FIG. 15 correspond to the respective connection points A to D shown in FIG. 10. The same holds true for the circuit in FIG. 16 discussed below.

As shown in FIG. 15, in the first example, the DC-DC converter circuit 10B further includes a first, second, fourth to eight, and tenth to twelfth diodes D1, D2, D4 to D8, and D10 to D12.

The first, second, fourth, fifth and sixth diodes D1, D2, D4, D5 and D6 are connected in parallel to the first, second, fourth, fifth and sixth semiconductor switches S1, S2, S4, S5 and S6 so that each of the first, second, fourth, fifth and sixth diodes D1, D2, D4, D5 and D6 allows current to flow in the opposite direction from the direction of on and off control of current by each of the first, second, fourth, fifth and sixth semiconductor switches S1, S2, S4, S5 and S6.

The seventh diode D7 is connected between the first semiconductor switch S1 and the inductor L (see connection point B) so that the seventh diode D7 allows current to flow in the opposite direction from that of the first diode D1. The eight diode D8 is connected between the second semiconductor switch S2 and the inductor L (see connection point B) so that the eight diode D8 allows current to flow in the opposite direction from that of the second diode D2.

The tenth diode D10 is connected between the fourth semiconductor switch S4 and the inductor L (see connection point C) so that the tenth diode D10 allows current to flow in the opposite direction from that of the fourth diode D4. The eleventh diode D11 is connected between the fifth semiconductor switch S5 and the inductor L (see connection point C) so that the eleventh diode D11 allows current to flow in the opposite direction from that of the fifth diode D5. The twelfth diode D12 is connected between the sixth semiconductor switch S6 and the inductor L (see connection point C) so that the twelfth diode D12 allows current to flow in the opposite direction from that of the sixth diode D6.

In this first example, the semiconductor element composed of the fourth semiconductor switch S4 and the fourth diode D4 can serve as a first reverse conducting semiconductor element H1 of the upper arm, and the semiconductor element composed of the first semiconductor switch S1 and the first diode D1 can serve as a second reverse conducting semiconductor element H2 of the lower arm.

Consequently, with the DC-DC converter circuit 10B, the first reverse conducting semiconductor element H1 and the second reverse conducting semiconductor element H2 can be connected in series and integrated for use as a 2-in-1 module M1.

Also, the semiconductor element composed of the fifth semiconductor switch S5 and the fifth diode D5 can serve as a third reverse conducting semiconductor element H3 of the upper arm, and the semiconductor element composed of the second semiconductor switch S2 and the second diode D2 can serve as a fourth reverse conducting semiconductor element H4 of the lower arm.

Consequently, with the DC-DC converter circuit 10B, the third reverse conducting semiconductor element H3 and the fourth reverse conducting semiconductor element H4 can be connected in series and integrated for use as a 2-in-1 module M2.

Thus, since the 2-in-1 modules M1 and M2 can thus be used, a circuit configuration that is more convenient to use can be realized.

With the circuit configuration in the first example, as shown in FIG. 15, each of anodes of the first to fourth diodes D1 to D3 cannot be shared with any of the first and second diodes D1 and D2. For example, when the first and second semiconductor switches S1 and S2 are IGBTs, emitters cannot be shared with any of the IGBTs. Also, when the first to fourth semiconductor switches S1 and S2 are MOSFETs, each of sources cannot be shared with any of the MOSFETs. In addition, when the first to fourth semiconductor switches S1 and S2 are GTOs, each of cathodes cannot be shared with any of the GTOs.

Accordingly, a gate drive power supply (not shown) has to be provided to each of the first and second semiconductor switches S1 and S2, that is, a total of two gate drive power supplies are needed.

From this standpoint, the following second example can be given as an example that can constitute a circuit with which the number of gate drive power supplies can be reduced with the DC-DC converter circuit 10B.

### Second Example

FIG. 16 is a circuit diagram of a second example that can constitute a circuit which can reduce the number of gate drive power supplies in the DC-DC converter circuit 10B shown in FIG. 10. It should be noted that FIG. 16 shows a part on the connection point B of the inductor L in the DC-DC converter circuit 10B.

With this second example, as shown in FIG. 16, the DC-DC converter circuit 10B further includes first, second, fourth and fifth diodes D1, D2, D4 and D5.

The first and second diodes D1 and D2 are connected in parallel to the first and second semiconductor switches S1 and S2 so that each of the first and second diodes D1 and D2 allows current to flow in the opposite direction from the direction of on and off control of current by each of the first and second semiconductor switches S1 and S2.

The fourth diode D4 is connected between the first semiconductor switch S1 and the positive pole side (see connection point A) of the first voltage supply E1 so that the fourth diode D4 allows current to flow in the opposite direction from that of the first diode D1.

The fifth diode D5 is connected between the second semiconductor switch S2 and the positive pole side (see connection point D) of the second voltage supply E2 so that the fifth diode D5 allows current to flow in the opposite direction from that of the second diode D2.

In this second example, the anode side of the first diode D1 and the anode side of the second diode D2 are connected, so an anode can be shared with the first diode D1 and the second diode D2 (see the broken line portion α).

Consequently, with the DC-DC converter circuit 10B, the same (shared) gate drive power supply (not shown) can be used for the first semiconductor switch S1 and the second semiconductor switch S2. Thus, only one gate drive power supply is needed for the first semiconductor switch S1 and the second semiconductor switch S2.

Next, control examples by the control device 20B of the fourth, fifth and sixth semiconductor switches S4, S5 and S6 will be described.

In the second embodiment, in a case where current is flowing through the inductor L, when the fourth, fifth and sixth semiconductor switches S4, S5 and S6 are all in their OFF states, a high voltage is applied to the fourth, fifth and sixth semiconductor switches S4, S5 and S6, so that any of the fourth, fifth and sixth semiconductor switches S4, S5 and S6 can be damaged.

From this standpoint, the DC-DC converter circuit 10B includes a protection function that performs first to third control examples of the following switching operation with the control device 20B.

It should be noted that in the following first to third control examples, current flowing through the inductor L can be measured with an ammeter (not shown). The control device 20B can be aware of whether or not current is flowing through the inductor L based on detection results of the ammeter.

### First Control Example

In the first control example, the control device 20B is configured to control the control voltages of the fourth to sixth semiconductor switches S4 to S6 so that when current is flowing through the inductor L, at least one of the fourth to sixth semiconductor switches S4 to S6 is constantly in its ON state.

Thus, a current path including the inductor L can be secured when current is flowing through the inductor L.

For example, in the case where current is flowing through the inductor L, when only the fifth semiconductor switch S5 is in its ON state, the third current path R3 (see part (c) of FIG. 11) is formed.

For example, in the case where current is flowing through the inductor L, when only the fourth semiconductor switch S4 is in its ON state, the sixth current path R6 (see part (c) of FIG. 12) is formed.

For example, in the case where current is flowing through the inductor L, when only the sixth semiconductor switch S6 is in its ON state, the eighth current path R8 (see part (b) of FIG. 13) is formed.

Thus, in the first control example, it is possible to avoid all of the fourth to sixth semiconductor switches S4 to S6 being in their OFF states, which prevents any of the fourth, fifth and sixth semiconductor switches S4, S5 and S6 from being damaged due to high voltage.

### Second Control Example

In the second control example, the control device 20B is configured to control the control voltages of the fourth to sixth semiconductor switches S4 to S6 in the following manner when current is flowing through the inductor L: Before turning off one or two of the fourth to sixth semiconductor switches S4 to S6, at least one of the fourth to sixth semiconductor switches S4 to S6 other than the semiconductor switch to be turned off is turned on in advance.

Thus, a current path including the inductor L can be secured when current is flowing through the inductor L.

For example, when current is flowing through the inductor L, before turning off the fourth and sixth semiconductor switches S4 and S6 that should be turned off, the other fifth semiconductor switch S5 is turned on in advance, and the first and second semiconductor switches S1 and S2 are in their OFF states. In this case, the eight current path R8 (see part (b) of FIG. 13) is formed.

Thus, in the second control example, it is possible to avoid all of the fourth to sixth semiconductor switches S4 to S6 being in their OFF states, which prevents any of the fourth, fifth and sixth semiconductor switches S4, S5 and S6 from being damaged due to high voltage.

### Third Control Example

In the third control example, the control device 20B is configured to control the control voltages of the first, second, fourth, fifth and sixth semiconductor switches S1, S2, S4, S5 and S6 in the following manner when current is flowing through the inductor L: When changing an operation mode indicating an ON state or an OFF state of the first, second, fourth, fifth and sixth semiconductor switches S1, S2, S4, S5 and S6, all of the semiconductor switches that are in their ON states in a pre-change operation mode remain in their ON states for a prescribed period of time after a change of the operation mode, or all of the semiconductor switches that should be in their ON states in a post-change operation mode are turned on a prescribed period of time before a change of the operation mode.

FIGS. 17 and 18 are state transition diagrams showing cases when changing an operation mode from one of the first to ninth modes to another mode in the third control example of the DC-DC converter circuit 10B shown in FIG. 10.

Part (a) of FIG. 17 shows a state in the first mode, part (b) of FIG. 17 shows a commutation state from the first mode to the second mode, which is a case where there is one possible current path in a commutation state, and part (c) of FIG. 17 shows a state in the second mode.

In the state shown in part (a) of FIG. 17, the first current path R1 (see part (a) of FIG. 11) is formed with the first mode.

Then, in the state shown in part (b) of FIG. 17, all of the semiconductor switches that are in their ON states in a pre-change operation mode (herein, the first and sixth semiconductor switches S1 and S6) remain in their ON states for a prescribed period of time after a change of the operation mode. Alternatively, all of the semiconductor switches that should be in their ON states in a post-change operation mode (herein, the first and fifth semiconductor switches S1 and S5) are turned on a prescribed period of time before a change of the operation mode. At this time, the first, fifth and sixth semiconductor switches S1, S5 and S6 are on their ON states, and, as a result, the first current path R1 (see part (a) of FIG. 11) is formed.

The state shown in part (c) of FIG. 17 shows the second mode, and the second current path R2 (see part (b) of FIG. 11) is formed.

Part (a) of FIG. 18 shows a state in the first mode, part (b) of FIG. 18 shows a commutation state from the first mode to the fifth mode, which is a case where there are two possible current paths in a commutation state and the current path alters depending on the magnitude relation between the output voltage V1 of the first voltage supply E1 and the output voltage V2 of the second voltage supply E2, and part (c) of FIG. 18 shows a state in the fifth mode.

In the state shown in part (a) of FIG. 18, the first current path R1 (see part (a) of FIG. 11) is formed with the first mode.

Then, in the state shown in part (b) of FIG. 18, all of the semiconductor switches that are in their ON states in a pre-change operation mode (herein, the first and sixth semiconductor switches S1 and S6) remain in their ON states for a prescribed period of time after a change of the operation mode. Alternatively, all of the semiconductor switches that should be in their ON states in a post-change operation mode (herein, the second and fourth semiconductor switches S2 and S4) are turned on a prescribed period of time before a change of the operation mode. At this time, the first, second, fourth and sixth semiconductor switches S1, S2, S4 and S6 are in their ON states. When the output voltage V1 of the first voltage supply E1 is greater than the output voltage V2 of the second voltage supply E2, the first current path R1 (see part (a) of FIG. 11) is formed. When the output voltage V1 of the first voltage supply E1 is less than the output voltage V2 of the second voltage supply E2, the fourth current path R4 (see part (a) of FIG. 12) is formed.

The state shown in part (c) of FIG. 18 shows the fifth mode, and the fifth current path R5 (see part (b) of FIG. 12) is formed.

Thus, in the third control example, it is possible to avoid all of the fourth to sixth semiconductor switches S4 to S6 being in their OFF states, and/or all of the fourth to sixth semiconductor switches S4 to S6 being in their OFF states, which prevents any of the fourth, fifth and sixth semiconductor switches S4, S5 and S6 from being damaged due to high voltage.

### REFERENCE SIGNS LIST

- 10A DC-DC: converter circuit
- 10B DC-DC: converter circuit
- 20A: control device
- 20B: control device
- D1to D12: first to twelfth diodes
- E1: first voltage supply
- E2: second voltage supply
- L: inductor
- S1 to S6: first to sixth semiconductor switches

## Claims

1. A DC-DC converter circuit, comprising:
first to sixth semiconductor switches that allow current to flow in one direction, and an inductor, wherein
the first to third semiconductor switches are connected to one end of the inductor in a direction such that current flows from the first to third semiconductor switches into the one end of the inductor,
the fourth to sixth semiconductor switches are connected to the other end of the inductor in a direction such that current flows out from the other end of the inductor into the fourth to sixth semiconductor switches,
a positive pole side of a first voltage supply is connected to opposite ends of the first and fourth semiconductor switches from the ends of the first and fourth semiconductor switches connected to the inductor,
a positive pole side of a second voltage supply is connected to opposite ends of the second and fifth semiconductor switches from the ends of the second and fifth semiconductor switches connected to the inductor,
a negative pole side of the first voltage supply and a negative pole side of the second voltage supply are both connected to opposite ends of the third and sixth semiconductor switches from the ends of the third and sixth semiconductor switches connected to the inductor.

2. The DC-DC converter circuit according to claim 1, further comprising:
first to sixth diodes connected in parallel to the first to sixth semiconductor switches so that the first to sixth diodes allow current to flow in the opposite direction from the direction of on and off control of current by the first to sixth semiconductor switches, and
seventh to twelfth diodes connected between the first to sixth semiconductor switches and the inductor so that the seventh to twelfth diodes allow current to flow in the opposite direction from that of the first to sixth diodes.

3. The DC-DC converter circuit according to claim 1, further comprising:
first to third diodes connected in parallel to the first to third semiconductor switches so that the first to third diodes allow current to flow in the opposite direction from the direction of on and off control of current by the first to third semiconductor switches, a fourth diode connected between the first semiconductor switch and the positive pole of the first voltage supply so that the fourth diode allows current to flow in the opposite direction from that of the first diode,
a fifth diode connected between the second semiconductor switch and the positive pole side of the second voltage supply so that the fifth diode allows current to flow in the opposite direction from that of the second diode, and
a sixth diode connected between the third semiconductor switch and the negative pole sides of both the first and second voltage supplies so that the sixth diode allows current to flow in the opposite direction from that of the third diode.

4. The DC-DC converter circuit according to any one of claims 1 to 3, comprising means for constantly keeping in an ON state at least one of the first to third semiconductor switches and at least one of the fourth to sixth semiconductor switches when current is flowing through the inductor.

5. The DC-DC converter circuit according to any one of claims 1 to 4, comprising means for, when current is flowing through the inductor, turning on in advance, before turning off one or two of the first to third semiconductor switches, at least one of the first to third semiconductor switches other than the semiconductor switch to be turned off, and turning on in advance, before turning off one or two of the fourth to sixth semiconductor switches, at least one of the fourth to sixth semiconductor switches other than the semiconductor switch to be turned off.

6. The DC-DC converter circuit according to any one of claims 1 to 5, comprising means for, in a state where current is flowing through the inductor, when changing an operation mode indicating an ON state and an OFF state of the first to sixth semiconductor switches, keeping in their ON states all of the semiconductor switches that are in their ON states in a pre-change operation mode, for a prescribed period of time after a change of the operation mode, or turning on all of the semiconductor switches that should be in their ON states in a post-change operation mode a prescribed period of time before a change of the operation mode.

7. The DC-DC converter circuit according to claim 1,
wherein the third semiconductor switch is replaced by the third diode.

8. The DC-DC converter circuit according to claim 7, further comprising:
first, second, fourth, fifth and sixth diodes connected in parallel to the first, second, fourth, fifth and sixth semiconductor switches so that the first, second, fourth, fifth and sixth diodes allow current to flow in the opposite direction from the direction of on and off control of current by the first, second, fourth, fifth and sixth semiconductor switches, and
seventh, eighth, tenth, eleventh and twelfth diodes connected between the first, second, fourth, fifth and sixth semiconductor switches and the inductor so that seventh, eighth, tenth, eleventh and twelfth diodes allow current to flow in the opposite direction from that of the first, second, fourth, fifth and sixth diodes.

9. The DC-DC converter circuit according to claim 7, further comprising:
first and second diodes connected in parallel to the first and second semiconductor switches so that the first and second diodes allow current to flow in the opposite direction from the direction of on and off control of current by the first and second semiconductor switches,
a fourth diode connected between the first semiconductor switch and the positive pole of the first voltage supply so that the fourth diode allows current to flow in the opposite direction from that of the first diode, and
a fifth diode connected between the second semiconductor switch and the positive pole side of the second voltage supply so that the fifth diode allows current to flow in the opposite direction from that of the second diode.

10. The DC-DC converter circuit according to any one of claims 7 to 9, comprising means for constantly keeping in an ON state at least one of the fourth to sixth semiconductor switches when current is flowing through the inductor.

11. The DC-DC converter circuit according to any one of claims 7 to 10, comprising means for, when current is flowing through the inductor, turning on in advance, before turning off one or two of the fourth to sixth semiconductor switches, at least one of the fourth to sixth semiconductor switches other than the semiconductor switch to be turned off.

12. The DC-DC converter circuit according to any one of claims 7 to 11, comprising means for, in a state where current is flowing through the inductor, when changing an operation mode indicating an ON state and an OFF state of the first, second, fourth, fifth and sixth semiconductor switches, keeping in their ON states all of the semiconductor switches that are in their ON states in a pre-change operation mode, for a prescribed period of time after a change of the operation mode, or turning on all of the semiconductor switches that should be in their ON states in a post-change operation mode a prescribed period of time before a change of the operation mode.
